# EUROPEAN PATENT APPLICATION

(11) **EP 4 560 358 A1**
(43) Date of publication of application: **28.05.2025**
(21) Application number: 23851594.4
(22) Date of filing: 26.07.2023
(51) Int. Cl.: G01S 19/42, H04W 64/00

(54) **POSITIONING METHOD AND RELATED APPARATUS**

(30) Priority: 10.08.2022 CN 202210957694
(71) Applicant: Huawei Technologies Co., Ltd., Shenzhen, Guangdong 518129 (CN); Peng Cheng Laboratory, Shenzhen, Guangdong 518000 (CN)
(72) Inventor: CHEN, Ying, Shenzhen, Guangdong 518129 (CN); TIE, Xiaolei, Shenzhen, Guangdong 518129 (CN); ZHANG, Jingwei, Shenzhen, Guangdong 518129 (CN)
(74) Representative: Thun, Clemens
(86) International application number: PCT/CN2023/109268
(87) International publication number: WO 2024/032372

(57) **Abstract**

An embodiment of this application discloses a positioning method. The method includes: A satellite sends a first reference signal and a second reference signal to a terminal device, and a network device obtains a receiving time difference between the terminal device receiving the first reference signal and the second reference signal. The network device determines location information of the terminal device based on location information of the satellite when the satellite sends the first reference signal, location information of the satellite when the satellite sends the second reference signal, a sending time interval between the satellite sending the first reference signal and the second reference signal, and the receiving time difference between the first reference signal and the second reference signal. According to the foregoing method, positioning measurement of the terminal device in a satellite communication scenario can be implemented without depending on a global navigation satellite system GNSS capability of the terminal device.

## Description

This application claims priority to Chinese Patent Application No. 202210957694.2, filed with the China National Intellectual Property Administration on August 10, 2022 and entitled "POSITIONING METHOD AND RELATED APPARATUS", which is incorporated herein by reference in its entirety.

### TECHNICAL FIELD

This application relates to the field of communication technologies, and in particular, to a positioning method and a related apparatus.

### BACKGROUND

Compared with a ground base station, a satellite (or referred to as a satellite base station) has a higher location, is more flexible in deployment, can provide wider coverage, and can provide a communication service in areas such as an ocean, a forest, and a high altitude that are difficult to be covered by the ground base station. Therefore, if a satellite communication network is integrated with terrestrial communication networks such as a 5th generation mobile networks new radio (5th generation mobile networks new radio, 5G NR) technology or a long term evolution (long term evolution, LTE) technology, coverage of the terrestrial communication network is greatly expanded, to provide a stable communication service for a ship, a train, an airplane, and a remote area.

Satellite communication is a communication scenario of 5G communication, and is also referred to as a non-terrestrial network (Non-terrestrial network, NTN). The NTN may support various types of terminal devices, including but not limited to a 5G type of terminal device, or an internet of things (internet of things, IoT). Some terminal devices may not support the global navigation satellite system (global navigation satellite system, GNSS). Therefore, a positioning method that does not depend on a GNSS capability is required.

### SUMMARY

A first aspect of embodiments of this application provides a positioning method, including:
A network device receives a first receiving time difference from a terminal device, where the first receiving time difference indicates a difference between time at which the terminal device receives a first reference signal and time at which the terminal device receives a second reference signal, the first reference signal is sent to the terminal device by a satellite, and the second reference signal is sent to the terminal device by the satellite.

The network device obtains a first time interval, where the first time interval indicates a time interval between a moment at which the satellite sends the first reference signal and a moment at which the satellite sends the second reference signal.

The network device obtains first coordinates and second coordinates, where the first coordinates indicate a location at which the satellite sends the first reference signal, and the second coordinates indicate a location at which the satellite sends the second reference signal.

The network device determines first location information based on the first coordinates, the second coordinates, the first time interval, and the first receiving time difference, where the first location information is location information that is of the terminal device and that is obtained by the network device through measurement.

It may be understood that the first reference signal and the second reference signal may be sent by a same satellite, or may be sent by different satellites. This is not limited in this embodiment of this application.

In a possible implementation, the network device obtains the first coordinates and the second coordinates from the satellite. For example, when the network device responsible for calculating the location information of the terminal device is a ground base station, the satellite sends the first coordinates to the ground base station after the satellite sends the first reference signal to the terminal device; and the satellite sends the second coordinates to the ground base station after the satellite sends the second reference signal to the terminal device. For another example, when the network device responsible for calculating the location information of the terminal device is the satellite, the satellite records the first coordinates after the satellite sends the first reference signal to the terminal device; and the satellite records the second coordinates after the satellite sends the second reference signal to the terminal device.

In another possible implementation, when the first reference signal and the second reference signal that are sent by the satellite are from the ground base station, the network device obtains location information of the ground base station when the ground base station sends the first reference signal to the satellite, and the network device obtains a feeding delay of sending the first reference signal by the ground base station to the satellite. Then, the network device calculates, based on the location information of the ground base station when the ground base station sends the first reference signal to the satellite and the feeding delay of sending the first reference signal by the ground base station to the satellite, location information (namely, the first coordinates) of the satellite when the satellite sends the first reference signal to the terminal device. Similarly, the network device obtains location information of the ground base station when the ground base station sends the second reference signal to the satellite, and the network device obtains a feeding delay of sending the second reference signal by the ground base station to the satellite. Then, the network device calculates, based on the location information of the ground base station when the ground base station sends the second reference signal to the satellite and the feeding delay of sending the second reference signal by the ground base station to the satellite, location information (namely, the second coordinates) of the satellite when the satellite sends the second reference signal to the terminal device.

In this embodiment of this application, the satellite sends the first reference signal and the second reference signal to the terminal device, and the network device obtains a receiving time difference between the terminal device receiving the first reference signal and the second reference signal. The network device determines the location information of the terminal device based on the location information of the satellite when the satellite sends the first reference signal, the location information of the satellite when the satellite sends the second reference signal, a sending time interval between the satellite sending the first reference signal and the second reference signal, and the receiving time difference between the first reference signal and the second reference signal. According to the foregoing method, positioning measurement of the terminal device in a satellite communication scenario can be implemented without depending on a GNSS capability of the terminal device.

In a possible implementation of the first aspect, when the network device calculates the location information of the terminal device, the network device may further obtain any one or more of the following:
the location information of the satellite when the satellite sends the first reference signal and the second reference signal, the location information of the satellite when the ground base station sends the first reference signal and the second reference signal to the satellite, location information of the ground base station when the ground base station sends the first reference signal and the second reference signal to the satellite, or the like; and
time at which the satellite sends the first reference signal and the second reference signal, time at which the satellite receives the first reference signal and the second reference signal from the ground base station, time at which the ground base station sends the first reference signal and the second reference signal to the satellite, time of the satellite when the ground base station sends the first reference signal and the second reference signal to the satellite, or the like.

The time related to the satellite may be obtained by the satellite according to a local clock of the satellite, or may be obtained through measurement by another device (for example, a satellite ground station). For example, the satellite ground station determines the time of the satellite based on the location information and ephemeris information of the satellite. This is not limited in embodiments of this application.

The time in this embodiment of this application may be absolute time, for example, universal time coordinated (Universal Time Coordinated, UTC), or may be relative time, for example, a slot, a frame, a subframe, or a system frame, where the relative time may be relative time for a time point, for example, a time difference, a slot difference, a subframe difference, or a system frame difference. This is not limited in this embodiment of this application.

In a possible implementation of the first aspect, the network device includes the ground base station and the satellite; or the network device includes the satellite. Specifically, when the satellite is used as the network device, that is, when the satellite has a processing function of the network device, the satellite generates the first reference signal and the second reference signal. Then, the satellite sends the first reference signal and the second reference signal in a broadcast manner. This solution is applicable to a plurality of communication scenarios, improving implementation flexibility.

It may be understood that in this embodiment of this application, another relay device may further exist between the ground base station and the satellite. For example, information (a signal, data, or the like) between the satellite and the ground base station is forwarded by using the satellite ground station.

It should be noted that in this embodiment of this application, the location information of the terminal device may be specifically calculated by the satellite, may be calculated by the ground base station, may be calculated by a core network, for example, a location management function (location management function, LMF) or an access and mobility management function (access and mobility management function, AMF) in the core network, or may be calculated by a data network, for example, a server or a network function that provides a positioning service in the data network. This is not limited in embodiments of this application. In other words, the network device in embodiments of this application includes but is not limited to the satellite, the ground base station, the core network, and/or the data network.

In a possible implementation of the first aspect, the first reference signal and the second reference signal that are sent to the terminal device by the satellite are from the ground base station. Specifically, when the satellite is used as a relay node between the ground base station and the terminal device, and forwards information about the ground base station, the satellite obtains the first reference signal and the second reference signal from the ground base station. Then, the satellite sends the first reference signal and the second reference signal to the terminal device. In this implementation, the network device (for example, the ground base station) further needs a first feeding delay and a second feeding delay. The first feeding delay is used as a transmission delay of the first reference signal from the ground base station to the satellite, and the second feeding delay is used as a transmission delay of the second reference signal from the ground base station to the satellite. A feeding delay from the ground base station to the satellite is obtained, to improve accuracy of calculating the location information of the terminal device.

In a possible implementation of the first aspect, the method further includes: The network device obtains the first feeding delay and the second feeding delay, where the first feeding delay is the transmission delay of the first reference signal from the ground base station to the satellite, and the second feeding delay is the transmission delay of the second reference signal from the ground base station to the satellite; and that the network device determines first location information based on the first coordinates, the second coordinates, the first receiving time difference, and the first time interval includes: The network device determines the first location information based on the first coordinates, the second coordinates, the first receiving time difference, the first time interval, the first feeding delay, and the second feeding delay.

In another possible implementation, when the satellite is used as the network device, the satellite that sends the first reference signal and the second reference signal to the terminal device may alternatively obtain the first reference signal and the second reference signal from another network device (for example, the ground base station or another satellite). In this implementation, the satellite that sends the first reference signal and the second reference signal also needs to obtain feeding delays corresponding to the reference signals (namely, the first reference signal and the second reference signal).

In a possible implementation of the first aspect, the method further includes: The network device receives second location information from the terminal device, where the second location information is location information that is of the terminal device and that is obtained through measurement by the terminal device; and verifying, by the network device by using the first location information, whether the second location information is accurate. The network device may alternatively verify, based on the first location information, whether location information (namely, the second location information) reported by the terminal device is accurate, to improve communication security.

In a possible implementation of the first aspect, that the network device obtains a first time interval includes: The network device determines, based on a first beam direction, the first reference signal and the second reference signal that correspond to the first receiving time difference, where the first beam direction is a beam direction in which the terminal device sends the first receiving time difference to the satellite; and the network device determines the first time interval based on sending time of the first reference signal and sending time of the second reference signal. The network device determines, based on the beam direction corresponding to the first receiving time difference, a reference signal corresponding to the first receiving time difference. For example, an index of a reference signal (for example, an SSB index) corresponding to a beam carrying the first receiving time difference is found based on a direction of the beam. For another example, when the core network calculates the location information of the terminal device, the network device (a satellite or a ground base station that manages the satellite) sends the first time interval to the core network, or the network device sends, to the core network, sending time at which the satellite sends the first reference signal to the terminal device, and sending time at which the satellite sends the second reference signal to the terminal device.

In a possible implementation of the first aspect, the method further includes: The network device receives a second receiving time difference from the terminal device, where the second receiving time difference indicates a difference between the time at which the terminal device receives the second reference signal and time at which the terminal device receives a third reference signal; and the network device obtains a second time interval, where the second time interval indicates a time interval between the moment at which the satellite sends the second reference signal and a moment at which the satellite sends the third reference signal; the network device obtains third coordinates, where the third coordinates indicate a location at which the satellite sends the third reference signal; and the network device determines the first location information based on the first coordinates, the second coordinates, the third coordinates, the first time interval, the second time interval, the first receiving time difference, and the second receiving time difference. The first location information is calculated with reference to more receiving time differences and the location information of the satellite, so that accuracy of the first location information can be effectively improved.

In a possible implementation of the first aspect, that the network device obtains a second time interval includes: The network device determines, based on a second beam direction, the second reference signal and the third reference signal that correspond to the second receiving time difference, where the second beam direction is a beam direction in which the terminal device sends the second receiving time difference to the satellite; and the network device determines the second time interval based on the sending time of the second reference signal and the sending time of the third reference signal. The network device determines, based on the beam direction corresponding to the second receiving time difference, a reference signal corresponding to the second receiving time difference. For example, an index of a reference signal (for example, an SSB index) corresponding to a beam carrying the second receiving time difference is found based on a direction of the beam.

In a possible implementation of the first aspect, an index of the first reference signal is different from an index of the third reference signal when the second beam direction is different from the first beam direction. When a broadcast beam of the satellite is a narrow beam, when the terminal device performs beam switching, directions of beams that carry two receiving time differences (the first receiving time difference and the second receiving time difference) are different. Further, the first reference signal and the second reference signal correspond to different beams.

In a possible implementation of the first aspect, the method further includes: The network device sends first indication information to the terminal device, where the first indication information indicates that the first reference signal and the second reference signal are used for positioning measurement. The network device indicates, to the terminal device, which reference signals are used for positioning measurement, thereby improving implementation flexibility of the solution.

In a possible implementation of the first aspect, the method further includes: The network device determines, from a plurality of reference signals based on first configuration information, the first reference signal and the second reference signal for positioning measurement. The network device determines, based on the first configuration information, reference signals for positioning measurement, thereby improving implementation flexibility of the solution.

In a possible implementation of the first aspect, the method further includes: The network device sends second indication information to the terminal device, where the second indication information indicates the terminal device to receive the first reference signal and the second reference signal based on the first time interval. The network device indicates the terminal device to receive a reference signal based on the first time interval and measures receiving time of the reference signal, where the measured reference signal is used for positioning measurement, thereby improving implementation flexibility of the solution.

In a possible implementation of the first aspect, the method further includes: The network device determines, based on second configuration information, the first time interval between the satellite sending the first reference signal and the second reference signal. The network device determines, based on the second configuration information, receiving time of a reference signal sent based on the first time interval, where the sent reference signal is used for positioning measurement, thereby improving implementation flexibility of the solution.

In a possible implementation of the first aspect, the method further includes: The network device receives third indication information from the terminal device, where the third indication information indicates that the first receiving time difference corresponds to the first reference signal and the second reference signal. The terminal device may notify, by using the third indication information, the network device of reference signals corresponding to the first receiving time difference obtained through measurement by the terminal device, thereby improving implementation flexibility of the solution.

In a possible implementation of the first aspect, that the network device obtains a first time interval includes: The network device determines, based on the third indication information, that the first receiving time difference corresponds to the first reference signal and the second reference signal; and the network device determines the first time interval based on the sending moment at which the satellite sends the first reference signal and the sending moment at which the satellite sends the second reference signal. Specifically, the network device finds, based on an indication (namely, the third indication information) of the terminal device, the first reference signal and the second reference signal that correspond to the first receiving time difference. Further, the sending moment at which the satellite sends the first reference signal and the sending moment at which the satellite sends the second reference signal are determined. Then, the first time interval is determined based on the two sending moments, to subsequently calculate the location information of the terminal device.

In a possible implementation of the first aspect, the first reference signal carries the sending time at which the satellite sends the first reference signal, and the second reference signal carries the sending time at which the satellite sends the second reference signal. Because the first reference signal and the second reference signal carry the sending time of the reference signals sent by the satellite, the terminal device determines, based on the sending time of the first reference signal (from the satellite), the sending time of the second reference signal (from the satellite), and the ephemeris information of the satellite, the location information (referred to as the first coordinates) of the satellite when the satellite sends the first reference signal, and the location information (referred to as the second coordinates) of the satellite when the satellite sends the second reference signal. The terminal device determines, based on the sending time of the first reference signal and the sending time of the second reference signal, a sending interval, namely, the first time interval, between the satellite sending the first reference signal and the second reference signal. Then, the terminal device determines the first location information based on the first time interval, the first receiving time difference, the first coordinates, and the second coordinates. According to the foregoing method, the terminal device may calculate the location information of the terminal device based on reference signals without depending on the GNSS capability.

In a possible implementation of the first aspect, the first reference signal and/or the second reference signal are/is any one of the following reference signals: a primary synchronization signal PSS, a secondary synchronization signal SSS, a synchronization signal/physical broadcast channel block SSB, a demodulation reference signal DMRS, a channel state information reference signal CSI-RS, or a phase tracking reference signal PTRS.

According to a second aspect, an embodiment of this application provides a communication method, including:
A terminal device receives a first reference signal sent by a satellite.

The terminal device receives a second reference signal sent by the satellite.

The terminal device determines a first receiving time difference, where the first receiving time difference indicates a difference between time at which the terminal device receives the first reference signal and time at which the terminal device receives the second reference signal.

The terminal device sends the first receiving time difference to a network device, so that the network device determines first location information based on the first receiving time difference, where the first location information is location information of the terminal device.

In this embodiment of this application, the terminal device may receive the first reference signal and the second reference signal from the satellite, and then determine the first receiving time difference based on the receiving time of the first reference signal and the receiving time of the second reference signal. Then, the terminal device may send the first receiving time difference to the network device, so that the network device calculates the location information of the terminal device based on the first receiving time difference.

In a possible implementation of the second aspect, the method further includes:
The terminal device obtains second location information, where the second location information is location information that is of the terminal device and that is obtained through measurement by the terminal device; and the terminal device sends the second location information to the network device. The terminal device may report, to the network device, the location information obtained through measurement by the terminal device (the second location information), so that the network device verifies the second location information based on the first location information, thereby improving communication security.

In a possible implementation of the second aspect, the method further includes: The terminal device receives a third reference signal sent by the satellite; the terminal device determines a second receiving time difference, where the second receiving time difference indicates a difference between the time at which the terminal device receives the second reference signal and time at which the terminal device receives the third reference signal; and the terminal device sends the second receiving time difference to the network device, so that the network device determines the first location information based on the first receiving time difference and the second receiving time difference. The first location information is calculated with reference to more receiving time differences and the location information of the satellite, so that accuracy of the first location information can be effectively improved.

In a possible implementation of the second aspect, the method further includes: The terminal device determines, from a plurality of reference signals based on third configuration information, the first reference signal and the second reference signal for positioning measurement, where the third configuration information indicates the terminal device to measure the receiving moment of the first reference signal and the receiving moment of the second reference signal. The terminal device determines, based on the third configuration information, reference signals for positioning measurement, thereby improving implementation flexibility of the solution.

In a possible implementation of the second aspect, the method further includes: The terminal device receives first indication information sent by the network device, where the first indication information indicates that the first reference signal and the second reference signal are used for positioning measurement; and the terminal device determines, based on the first indication information, the first reference signal and the second reference signal whose receiving moments need to be measured. The network device indicates, to the terminal device, which reference signals are used for positioning measurement, thereby improving implementation flexibility of the solution.

In a possible implementation of the second aspect, the method further includes: The terminal device determines, based on fourth configuration information, the first time interval between receiving the first reference signal and the second reference signal, where the fourth configuration information indicates the first time interval; and the terminal device receives, based on the fourth configuration information, the second reference signal after waiting for the first time interval after receiving the first reference signal. The terminal device receives a reference signal based on the first time interval based on an indication of the fourth configuration information, and measures receiving time of the reference signal, where the measured reference signal is used for positioning measurement, thereby improving implementation flexibility of the solution.

In a possible implementation of the second aspect, the method further includes: The terminal device receives second indication information sent by the network device, where the second indication information indicates the terminal device to receive the first reference signal and the second reference signal based on the first time interval; and the terminal device receives, based on the second indication information, the second reference signal after waiting for the first time interval after receiving the first reference signal.

The network device indicates the terminal device to receive a reference signal based on the first time interval and measures receiving time of the reference signal, where the measured reference signal is used for positioning measurement, thereby improving implementation flexibility of the solution.

In a possible implementation of the second aspect, the method further includes: The terminal device sends third indication information to the network device, where the third indication information indicates the terminal device to receive the first reference signal and the second reference signal based on the first receiving time difference. The terminal device may notify, by using the third indication information, the network device of reference signals corresponding to the first receiving time difference obtained through measurement by the terminal device, thereby improving implementation flexibility of the solution.

In a possible implementation of the second aspect, that the first reference signal carries the sending time at which the satellite sends the first reference signal, and the second reference signal carries the sending time at which the satellite sends the second reference signal further includes: The terminal device determines, based on the first reference signal, first coordinates of the satellite when the satellite sends the first reference signal; the terminal device determines, based on the second reference signal, second coordinates of the satellite when the satellite sends the second reference signal; the terminal device determines the first time interval based on the sending time of the first reference signal and the sending time of the second reference signal; and the terminal device determines the first location information based on the first time interval, the first receiving time difference, the first coordinates, and the second coordinates. According to the foregoing method, the terminal device may calculate the location information of the terminal device based on reference signals without depending on the GNSS capability.

In a possible implementation of the second aspect, the method further includes: The terminal device initiates random access to the network device based on the first location information. This can reduce a deviation when the terminal device initiates the random access.

According to a third aspect, an embodiment of this application provides a communication apparatus. The communication apparatus is used as a network device, and the communication apparatus includes a transceiver module and a processing module connected to the transceiver module. The communication apparatus is configured to implement the method according to any one of the implementations of the first aspect.

According to a fourth aspect, an embodiment of this application provides a communication apparatus. The communication apparatus is used as a terminal device, and the communication apparatus includes a transceiver module and a processing module connected to the transceiver module. The communication apparatus is configured to implement the method according to any one of the implementations of the second aspect.

According to a fifth aspect, an embodiment of this application provides a communication apparatus. The communication apparatus is used as a network device, and the communication apparatus includes a communication interface and a processor connected to the communication interface. The communication apparatus is configured to implement the method according to any one of the implementations of the first aspect.

According to a sixth aspect, an embodiment of this application provides a communication apparatus. The communication apparatus is used as a terminal device, and the communication apparatus includes a communication interface and a processor connected to the communication interface. The communication apparatus is configured to implement the method according to any one of the implementations of the second aspect.

According to a seventh aspect, a communication system is provided. The communication system includes the communication apparatuses according to the third aspect or the fourth aspect.

According to an eighth aspect, a communication system is provided. The communication system includes the communication apparatuses according to the fifth aspect and the sixth aspect.

A ninth aspect of this application provides a computer storage medium. The computer storage medium may be nonvolatile. The computer storage medium stores computer-readable instructions. When the computer-readable instructions are executed by a processor, the method according to any one of the implementations of the first aspect or the second aspect is implemented.

A tenth aspect of this application provides a computer program product including instructions. When the computer program product runs on a computer, the computer is enabled to perform the method according to any one of the implementations of the first aspect or the second aspect.

An eleventh aspect of this application provides a chip system. The chip system includes a processor and an interface circuit, and is configured to support a network device in implementing functions in the foregoing aspects, for example, sending or processing data and/or information in the foregoing methods. In a possible design, the chip system further includes a memory. The memory is configured to store program instructions and data that are necessary for the network device. The chip system may include a chip, or may include a chip and another discrete device.

A twelfth aspect of this application provides a communication apparatus. The communication apparatus includes:
a memory, including instructions; and
a processor, where when the processor executes the instructions,
the communication apparatus is enabled to perform the method according to any one of the first aspect and/or the second aspect.

### BRIEF DESCRIPTION OF DRAWINGS

FIG. 1 is a diagram of a communication scenario according to an embodiment of this application;
FIG. 2 is a diagram of another communication scenario according to an embodiment of this application;
FIG. 3 is a diagram of still another communication scenario according to an embodiment of this application;
FIG. 4 is a diagram of an embodiment of a positioning method according to an embodiment of this application;
FIG. 5 is a diagram of an SSB;
FIG. 6 is a diagram of an application scenario according to an embodiment of this application;
FIG. 7 is a diagram of an application scenario according to an embodiment of this application;
FIG. 8 is a diagram of a hardware structure of a communication apparatus according to an embodiment of this application;
FIG. 9 is a diagram of an embodiment of a communication apparatus 900 according to an embodiment of this application; and
FIG. 10 is a diagram of an embodiment of a communication apparatus 1000 according to an embodiment of this application.

### DESCRIPTION OF EMBODIMENTS

The following describes embodiments of this application. It is clear that the described embodiments are merely a part of but not all of embodiments of this application. A person of ordinary skill in the art may learn that, as a new application scenario emerges, the technical solutions provided in embodiments of this application are also applicable to a similar technical problem.

The terms "include" and "have" in the specification, claims, and accompanying drawings of this application and any variants thereof are intended to cover non-exclusive inclusion. For example, a process, method, system, product, or device including a series of steps or modules is not necessarily limited to those clearly listed steps or modules, but may include other steps or modules that are not clearly listed or are inherent to the process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effect can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

In descriptions of this application, unless otherwise specified, "/" means "or". For example, A/B may mean A or B. In this specification, "and/or" describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Terms such as "first" or "second" do not limit a quantity and an execution sequence, and the terms such as "first" or "second" do not indicate a definite difference.

It should be noted that in this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

The method provided in embodiments of this application may be applied to a long term evolution (long term evolution, LTE) system, a 5th generation (5th generation, 5G) system, a new radio (new radio, NR) system, a wireless local area network (wireless local area network, WLAN) system and a future evolved system, or a plurality of converged communication systems. The 5G system may be a non-standalone (non-standalone, NSA) 5G system or a standalone (standalone, SA) 5G system. For ease of description, in embodiments of this application, an example in which the provided method is applied to the 5G system or the NR system is used to describe the method provided in embodiments of this application. When the method provided in embodiments of this application is applied to another system, a network element in embodiments of this application is replaced with a network element that has a same or similar function in a corresponding system for understanding.

In embodiments of this application, a device, a network element, or a functional entity on a network side is collectively referred to as a network device. In embodiments of this application, the network device includes at least a positioning server and an access network device. The positioning server provides a positioning service for a terminal device. The access network device provides, for the terminal device, a service of accessing a communication network. First, a communication scenario to which embodiments of this application are applicable is described. A communication scenario provided in embodiments of this application includes a terminal device, a satellite, a ground base station, a core network, and a data network.

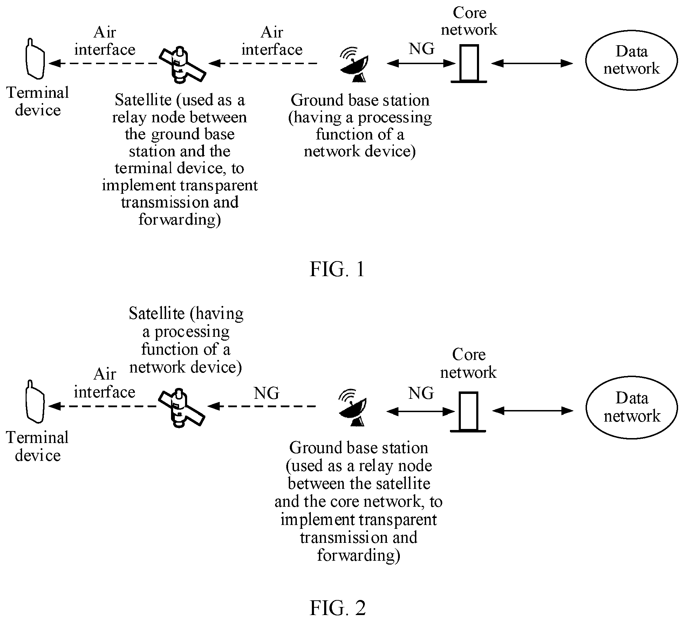

A possible communication scenario is shown in FIG. 1. FIG. 1 is a diagram of a communication scenario according to an embodiment of this application. In the communication scenario shown in FIG. 1, a satellite is used as a relay node between a ground base station and a terminal device, to implement transparent transmission and forwarding between the terminal device and the ground base station. The satellite is connected to the terminal device by using an air interface, and the satellite is connected to the ground base station by using an air interface. The ground base station has a processing function of a network device, and the ground base station is connected to a core network by using an NG interface. The ground base station is connected to a data network by using the core network. In other words, the ground base station provides a communication service for the terminal device by using the satellite.

Another possible communication scenario is shown in FIG. 2. FIG. 2 is a diagram of another communication scenario according to an embodiment of this application. In the communication scenario shown in FIG. 2, a satellite has a processing function of a network device. As a relay node between the satellite and a core network, a ground base station implements transparent transmission and forwarding between the satellite and the core network. The satellite is connected to a terminal device by using an air interface, and the satellite is connected to the ground base station by using an NG interface. The ground base station is connected to the core network by using an NG interface. The ground base station is connected to a data network by using the core network. In other words, the satellite provides a communication service for the terminal device.

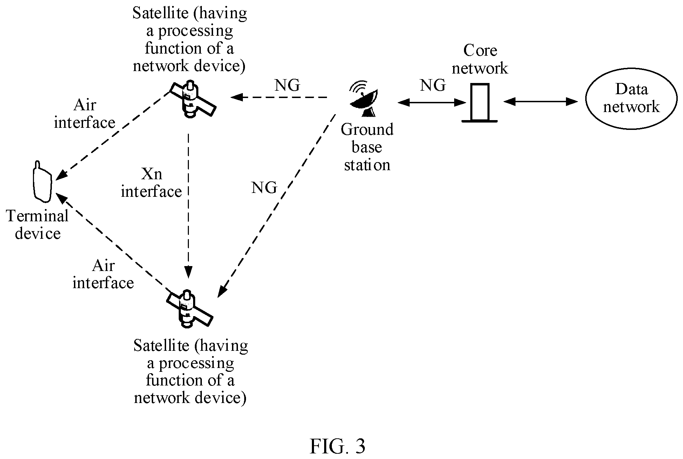

Based on the communication scenario shown in FIG. 2, a plurality of satellites may jointly provide a communication service for the terminal device, referring to FIG. 3. FIG. 3 is a diagram of still another communication scenario according to an embodiment of this application. A plurality of satellites shown in FIG. 3 have a processing function of a network device, and the plurality of satellites are connected by using an Xn interface. The plurality of satellites are connected to a terminal device by using an air interface.

The terminal device in embodiments of this application includes but is not limited to a mobile phone, an internet of things device, a smart home device, an industrial control device, a vehicle device, an uncrewed aerial vehicle device, or the like. In embodiments of this application, the terminal device is various terminal devices or apparatuses having a wire communication function, for example, a mobile phone (also referred to as a "cellular" phone) and a computer having a mobile terminal, or may be a portable, pocket-sized, handheld, computer built-in, or vehicle-mounted mobile apparatus, which exchanges language and/or data with a radio access network. For example, the terminal device is a device like a personal communication service (personal communication service, PCS) phone, a cordless phone, a session initiation protocol (SIP) phone, a wireless local loop (wireless local loop, WLL) station, or a personal digital assistant (personal digital assistant, PDA). The terminal device may also be referred to as a system, a subscriber unit (subscriber Unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), a user device (user device), or user equipment. The terminal device is, for example, a vehicle, a vehicle-mounted device, a vehicle-mounted module or unit, a flight device (including but not limited to an uncrewed aerial vehicle), an airborne device, an airborne module or unit, a drive test infrastructure device, a handheld device, a wearable device, a computing device, or another processing device connected to a wireless modem, for example, vehicle user equipment (vehicle user equipment, VUE) or air conditioner user equipment.

The core network in embodiments of this application supports services such as user access control, mobility management, session management, user authentication, or charging. The core network includes a plurality of functional units, which may be classified into control-plane functional entities and data-plane functional entities. An access and mobility management unit (AMF) is responsible for user access management, authentication, and mobility management. A user plane unit (UPF) is responsible for managing functions such as user plane data transmission and traffic statistics collection.

The ground base station in embodiments of this application is responsible for forwarding signaling and service data between the satellite and the core network.

The air interface in embodiments of this application is a radio link between the terminal device and the network device.

The Xn interface in embodiments of this application is an interface between network devices, and is mainly used for signaling exchange such as handover.

The NG interface in embodiments of this application is an interface between the network device and the core network, and is configured to exchange signaling such as NAS of the core network and service data of a user.

As the communication system changes, the foregoing interfaces may also change accordingly. For example, in a 4G communication system, an Xn interface is referred to as an X2 interface, and an NG interface is referred to as an S1 interface.

It should be noted that in embodiments of this application, location information of the terminal device may be specifically calculated by the satellite, may be calculated by the ground base station, may be calculated by the core network, for example, a location management function (location management function, LMF) or an AMF in the core network, or may be calculated by the data network, for example, a server or a network function that provides a positioning service in the data network. This is not limited in embodiments of this application. In other words, the network device in embodiments of this application includes but is not limited to the satellite, the ground base station, the core network, and/or the data network.

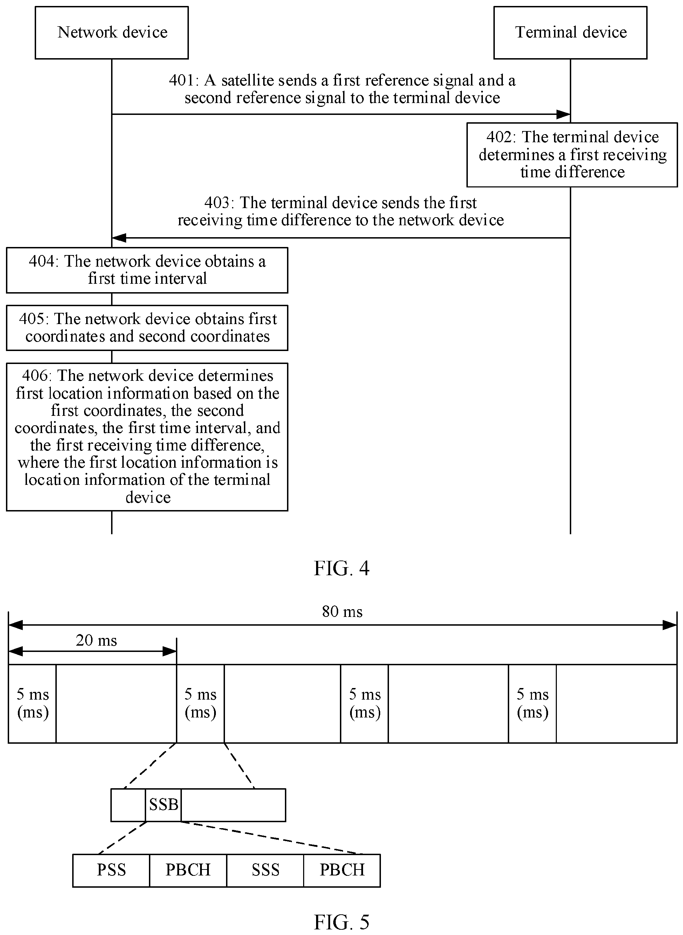

The following describes embodiments of this application with reference to the accompanying drawings. FIG. 4 is a diagram of an embodiment of a positioning method according to an embodiment of this application. The positioning method provided in this embodiment of this application includes the following steps.

401: A satellite sends a first reference signal and a second reference signal to a terminal device.

In this embodiment, the satellite separately sends the first reference signal and the second reference signal to the terminal device.

In a possible implementation, when the satellite is used as a network device, that is, the satellite has a processing function of the network device, the satellite generates the first reference signal and the second reference signal. Then, the satellite sends the first reference signal and the second reference signal in a broadcast manner.

In another possible implementation, when the satellite is used as a relay node between the ground base station and the terminal device, and forwards information about the ground base station, the satellite obtains the first reference signal and the second reference signal from the ground base station. Then, the satellite sends the first reference signal and the second reference signal to the terminal device. In this implementation, the network device (for example, the ground base station) further needs a first feeding delay and a second feeding delay. The first feeding delay is used as a transmission delay of the first reference signal from the ground base station to the satellite, and the second feeding delay is used as a transmission delay of the second reference signal from the ground base station to the satellite.

In another possible implementation, when the satellite is used as the network device, the satellite that sends the first reference signal and the second reference signal to the terminal device may alternatively obtain the first reference signal and the second reference signal from another network device (for example, the ground base station or another satellite). In this implementation, the satellite that sends the first reference signal and the second reference signal also needs to obtain feeding delays corresponding to the reference signals (namely, the first reference signal and the second reference signal).

The following describes the first reference signal and the second reference signal.

There are a plurality of possible implementations of the first reference signal and the second reference signal in embodiments of this application, including but not limited to a primary synchronization signal (Primary synchronization signal, PSS), a secondary synchronization signal (Secondary synchronization signal, SSS), a synchronization signal/physical broadcast channel block ((synchronization signal, SS)/(physical broadcast channel, PBCH) block, SSB), a demodulation reference signal (demodulation reference signal, DMRS), a channel state information reference signal (Channel State Information Reference Signal, CSI-RS), or a phase tracking reference signal (phase tracking reference signal, PTRS). An example in which the first reference signal and the second reference signal are SSBs (or PSSs, or SSSs) is used below for description.

FIG. 5 is a diagram of an SSB. In a possible implementation, a periodicity of the SSB is 80 milliseconds (ms). One or more SSBs are sent in a half-frame whose duration is 5 ms at an interval of 20 ms. The half-frame carrying the SSB may also be referred to as a burst (burst) of the SSB or a burst. Each burst includes one or more SSBs, and indexes of SSBs (SSB index) included in each burst are different from each other, and are usually in ascending order, for example, in ascending order starting from 0. Each of the SSBs includes a PSS, a PBCH, an SSS, and a PBCH.

Specifically, the network device sends the SSB by using a broadcast beam. The broadcast beam may be specifically a scanning beam (also referred to as a narrow beam), or the broadcast beam may be a wide beam. The following separately provides descriptions.
(1) When the broadcast beam is a narrow beam, different SSB indexes correspond to different beam directions. Usually, the terminal device can receive only SSBs with a same SSB index in a same beam direction. In other words, SSB indexes of the SSBs received by the terminal device within coverage of a same beam are the same.
(2) When the broadcast beam is a wide beam, the network device may send SSBs with different SSB indexes in turn. Correspondingly, the terminal device receives the SSBs with the different SSB indexes in a same beam direction (that is, within coverage of a same beam). The network device may send SSBs with a same SSB index. Correspondingly, the terminal device receives the SSBs with the same SSB index in a same beam direction (that is, within coverage of a same beam).

In a possible implementation, the first reference signal and the second reference signal may be all reference signals sent by the satellite. In other words, the terminal device needs to measure receiving moments of all the reference signals sent by the satellite, and report a receiving time difference between two adjacent reference signals. For example, the terminal device measures a receiving time difference between all SSBs sent by the satellite.

In another possible implementation, the first reference signal and the second reference signal may alternatively be any plurality of reference signals sent by the satellite. Specifically, a configuration resource of the network device indicates that a total of Y reference signals are sent in any sending periodicity. The network device selects, from the Y reference signals, X reference signals for positioning measurement, where the X reference signals are used as the first reference signal and the second reference signal. For the network device, which reference signals are selected as the first reference signal and the second reference signal may be determined based on preconfiguration information in the network device or a protocol agreement, or may be determined based on indication information from the terminal device. Correspondingly, because the terminal device needs to determine which reference signals are used for positioning measurement, the terminal device may also determine the first reference signal and the second reference signal based on the preconfiguration information or the protocol agreement. The terminal device may further determine, based on the indication information from the network device, which reference signals are used as the first reference signal and the second reference signal. Alternatively, after selecting the first reference signal and the second reference signal, the terminal device may report the selected first reference signal and the selected second reference signal to the network device. For example, the terminal device selects any plurality of SSBs in all the SSBs sent by the satellite to measure receiving moments, and then reports a receiving time difference between the SSBs to the satellite.

The following separately provides descriptions.
(A) The network device (namely, the satellite) selects, based on a protocol agreement or configuration information, the first reference signal and the second reference signal that are used for positioning measurement.

Specifically, the network device determines, from a plurality of reference signals based on first configuration information, the first reference signal and the second reference signal for positioning measurement, for example, selects SSBs as the first reference signal and the second reference signal, or selects PSSs as the first reference signal and the second reference signal, and for another example, selects which PSSs as the first reference signal and the second reference signal.

For example, the network device selects, based on the first configuration information, first X SSBs in Y SSBs included in each sending periodicity, for positioning measurement, where the first X SSBs are used as the first reference signal and the second reference signal, Y is a positive integer, and X is a positive integer.

For another example, the network device selects, based on the first configuration information, a first SSB (for example, an SSB index 0) in Y SSBs sent in each periodicity (for example, the periodicity is 20 ms) for positioning measurement. A first SSB (for example, an SSB index 0) in a periodicity A is used as the first reference signal, and a first SSB in a periodicity A + 1 is used as the second reference signal.

For another example, the network device selects, based on the first configuration information, one reference signal as a reference signal for positioning measurement at an interval of H frames in a periodicity H manner by using a specific frame as a start point. That is, the first reference signal and the second reference signal are separated by H frames.

For another example, the network device selects, based on the first configuration information, reference signals corresponding to a plurality of frame numbers or a plurality of subframe numbers as reference signals for positioning measurement. That is, the first configuration information includes the plurality of frame numbers or the plurality of subframe numbers, and the reference signals corresponding to the plurality of frame numbers or the plurality of subframe numbers are used for positioning measurement.

Further, the network device may further determine, based on a protocol agreement or configuration information, a time interval between the satellite sending the first reference signal and the second reference signal. In this embodiment of this application, the time interval between the first reference signal and the second reference signal is referred to as a first time interval. For example, the network device determines, based on second configuration information, the first time interval between the satellite sending the first reference signal and the second reference signal. For example, if the second configuration information indicates that the first time interval is 20 ms, the network device sends, at an interval of 20 ms based on the second configuration information, a reference signal used for positioning measurement.

(B) The network device determines, by receiving indication information from the terminal device, a reference signal used for positioning measurement.

Specifically, the terminal device selects some reference signals for positioning measurement, and then determines a receiving time difference between these reference signals. The network device receives third indication information from the terminal device, where the third indication information indicates that a first receiving time difference (to be specific, a difference between receiving time of the first reference signal and receiving time of the second reference signal in the terminal device) corresponds to the first reference signal and the second reference signal, so that the network device subsequently determines location information of the terminal device.

(C) The terminal device selects, based on a protocol agreement or configuration information, the first reference signal and the second reference signal that are used for positioning measurement.

Specifically, the terminal device determines, from a plurality of reference signals based on third configuration information, the first reference signal and the second reference signal for positioning measurement, for example, selects SSBs as the first reference signal and the second reference signal, or selects PSSs as the first reference signal and the second reference signal, and for another example, selects which PSSs as the first reference signal and the second reference signal.

For example, the terminal device selects, based on the third configuration information, first X SSBs in Y SSBs received in each periodicity (for example, the periodicity is 80 ms) for positioning measurement, where the first X SSBs are used as the first reference signal and the second reference signal. The terminal device measures a receiving time difference between two adjacent SSBs in the first X SSBs based on the third configuration information.

For another example, the terminal device selects, based on the third configuration information, a first SSB in Y SSBs received in each periodicity (for example, the periodicity is 20 ms) for positioning measurement. A first SSB in a periodicity A is used as the first reference signal, and a first SSB in a periodicity A + 1 is used as the second reference signal. The terminal device measures a receiving time difference between the first reference signal and the second reference signal based on the third configuration information.

For another example, the terminal device selects, based on the third configuration information, one reference signal as a reference signal for positioning measurement at an interval of H frames in a periodicity H manner by using a specific frame as a start point. That is, the first reference signal and the second reference signal are separated by H frames. Then, the terminal device periodically determines a receiving time difference (namely, the first receiving time difference) between the reference signals used for positioning measurement.

For another example, the terminal device selects, based on the third configuration information, reference signals corresponding to a plurality of frame numbers or a plurality of subframe numbers as reference signals for positioning measurement. That is, the third configuration information includes the plurality of frame numbers or the plurality of subframe numbers, and the reference signals corresponding to the plurality of frame numbers or the plurality of subframe numbers are used for positioning measurement. When a frame number or a subframe number of a reference signal received by the terminal device belongs to the frame numbers or the subframe numbers indicated by the third configuration information, the terminal device determines receiving time of these reference signals, and further determines a receiving time difference between two adjacent reference signals.

Further, the terminal device determines, based on fourth configuration information, a first time interval between receiving the first reference signal and the second reference signal, where the fourth configuration information indicates the first time interval; and the terminal device receives, based on the fourth configuration information, the second reference signal after waiting for the first time interval after receiving the first reference signal. Specifically, the terminal device may determine a time interval between measuring the first reference signal and measuring the second reference signal. In other words, the terminal device receives a plurality of reference signals from the satellite, and the terminal device may determine, based on an indication of the fourth configuration information, a received reference signal at an interval of 20 ms or 40 ms for positioning measurement. Time of the interval is the first time interval.

(D) The terminal device determines, based on indication information of the network device, the first reference signal and the second reference signal that are used for positioning measurement.

Specifically, the terminal device receives first indication information from the network device, where the first indication information indicates, to the terminal device, that the first reference signal and the second reference signal are used for positioning measurement, for example, indicates that SSBs are used as the first reference signal and the second reference signal, or indicates that PSSs are used as the first reference signal and the second reference signal, and for another example, indicates which PSSs are selected as the first reference signal and the second reference signal.

For example, the terminal device selects, based on the first indication information, first X SSBs in Y SSBs received in each periodicity (for example, the periodicity is 80 ms) for positioning measurement, and the first X SSBs are used as the first reference signal and the second reference signal. The terminal device measures a receiving time difference between two adjacent SSBs in the first X SSBs based on the first indication information.

For another example, the terminal device selects, based on the first indication information, a first SSB in Y SSBs received in each periodicity (for example, the periodicity is 20 ms) for positioning measurement. A first SSB in a periodicity A is used as the first reference signal, and a first SSB in a periodicity A+ 1 is used as the second reference signal. The terminal device measures the receiving time difference between the first reference signal and the second reference signal based on the first indication information.

For another example, the terminal device selects, based on the first indication information, one reference signal as a reference signal for positioning measurement at an interval of H frames in a periodicity H manner by using a specific frame as a start point. That is, the first reference signal and the second reference signal are separated by H frames. Then, the terminal device periodically determines a receiving time difference (namely, the first receiving time difference) between the reference signals used for positioning measurement.

For another example, the terminal device selects, based on the first indication information, reference signals corresponding to a plurality of frame numbers or a plurality of subframe numbers as reference signals for positioning measurement. That is, the first indication information includes the plurality of frame numbers or the plurality of subframe numbers, and the reference signals corresponding to the plurality of frame numbers or the plurality of subframe numbers are used for positioning measurement. When a frame number or a subframe number of a reference signal received by the terminal device belongs to the frame numbers or the subframe numbers indicated by the first indication information, the terminal device determines receiving time of the reference signal, and further determines a receiving time difference between two adjacent reference signals.

For another example, the terminal device enables a positioning measurement function after receiving the first indication information. In this case, the first reference signal and the second reference signal that are used for positioning measurement are determined based on the first indication information or the third configuration information. Then, the first receiving time difference is determined, and the first receiving time difference is reported to the network device. The first indication information may carry an identifier field, where the identifier field indicates the terminal device to enable or disable the positioning measurement function.

Further, the terminal device determines, based on second indication information from the network device, a time interval between measuring the first reference signal and measuring the second reference signal. In other words, the terminal device may receive a plurality of reference signals from the satellite, and then the terminal device determines, based on the second indication information, one received reference signal for positioning measurement at an interval of 20 ms or 40 ms. The time interval is the first time interval, and is the time interval between the first reference signal and the second reference signal.

The first indication information, the second indication information, and/or the third indication information may be carried in a plurality of types of signaling (a message, information, a packet, or a channel), including but not limited to downlink control information (Downlink control information, DCI), a media access control control element (Media access control control element, MAC CE), or radio resource control (Radio resource control, RRC). For example, when the first reference signal and the second reference signal are CSI-RSs, the first indication information sent to the terminal device by the network device may be carried in the DCI or the MAC CE.

Optionally, the network device (the satellite) may further send, to the terminal device, more reference signals used for positioning measurement, such as a third reference signal and a fourth reference signal, to improve accuracy of positioning measurement. A specific configuration manner and a specific sending manner are similar to those of the first reference signal and the second reference signal, and details are not described herein.

It may be understood that the first reference signal and the second reference signal may be sent by a same satellite, or may be sent by different satellites. This is not limited in this embodiment of this application.

402: The terminal device determines the first receiving time difference.

In this embodiment, after receiving the first reference signal and the second reference signal from the satellite, the terminal device first determines receiving time of the first reference signal and receiving time of the second reference signal. Then, the first receiving time difference is determined based on the receiving time of the first reference signal and the receiving time of the second reference signal.

Further, when reference signals used for positioning measurement further include the third reference signal (or more reference signals such as the fourth reference signal), the terminal device may further determine a difference between receiving time of the third reference signal and the receiving time of the second reference signal, namely, a second receiving time difference. By analogy, the terminal device may further determine a difference between the receiving time of the third reference signal and receiving time of the fourth reference signal, namely, a third receiving time difference.

Optionally, the terminal device may determine, based on the indication information of the network device, which reference signals are used for positioning measurement. Then, the terminal device calculates the receiving time difference.

Optionally, the terminal device may determine, based on the indication information of the network device, which reference signals are used for positioning measurement. Then, the terminal device selects a part of the reference signals, and calculates the receiving time difference. For example, the network device configures, for the terminal device, K SSBs for positioning measurement, and the terminal device selects X SSBs thereof and calculates a receiving time difference between two adjacent SSBs in the X SSBs.

Optionally, the terminal device may locally calculate the location information of the terminal device based on the first reference signal and the second reference signal. Specifically, the first reference signal carries sending time at which the satellite sends the first reference signal, and the second reference signal carries sending time at which the satellite sends the second reference signal. The terminal device determines, based on the sending time of the first reference signal (from the satellite), the sending time of the second reference signal (from the satellite), and ephemeris information of the satellite, location information (referred to as first coordinates) of the satellite when the satellite sends the first reference signal, and location information (referred to as second coordinates) of the satellite when the satellite sends the second reference signal. The terminal device determines, based on the sending time of the first reference signal and the sending time of the second reference signal, a sending interval, namely, the first time interval, between the satellite sending the first reference signal and the second reference signal. Then, the terminal device determines the first location information based on the first time interval, the first receiving time difference, the first coordinates, and the second coordinates.

Optionally, after determining the first location information, the terminal device initiates random access to the network device based on the first location information. For example, a timing advance (Timing Advance, TA) is compensated based on the first location information. This can reduce a deviation when the terminal device initiates the random access.

403: The terminal device sends the first receiving time difference to the network device.

In this embodiment, the terminal device sends, to the network device (namely, the satellite), a receiving time difference between reference signals used for positioning measurement, such as the first receiving time difference or the second receiving time difference.

For different beam scenarios, an example in which the first reference signal and the second reference signal are SSBs (or PSSs or SSSs) is used for description.

(AA) When the satellite uses a narrow beam (also referred to as a scanning beam) as the broadcast beam, there may be the following scenarios. The satellite sends the first reference signal and the second reference signal to the terminal device in a first beam direction. In this case, the terminal device sends the first receiving time difference to the satellite in the first beam direction. Beam directions corresponding to SSB indexes may be different, in other words, the terminal device usually can receive only SSBs with a same SSB index in a same beam. Therefore, the network device may determine, based on the first beam direction, the first reference signal and the second reference signal that correspond to the first receiving time difference.

For example, the terminal device selects PSSs (or SSSs or SSBs) with a same SSB index for positioning measurement. For example, PSSs (or SSSs or SSBs) with an SSB index 0 are selected for positioning measurement. The terminal device determines a receiving time difference between two adjacent PSSs (or SSSs or SSBs) with the SSB index 0 in time domain, and sends the receiving time difference (namely, the first receiving time difference) to the satellite in a beam direction of the PSSs (or the SSSs or the SSBs) with the SSB index 0. The satellite determines, based on the beam direction, that reference signals corresponding to the receiving time difference are the PSSs (or SSSs or SSBs) with the SSB index 0. Further, a sending interval (namely, the first time interval) between the satellite sending the PSSs (or the SSSs or the SSBs) with the SSB index 0 is determined.

A relative location of the terminal device to the satellite may change. Therefore, the terminal device may receive, in a second beam direction, the third reference signal sent by the satellite. In this case, the terminal device sends the second receiving time difference (corresponding to the difference between the receiving time of the third reference signal and the receiving time of the second reference signal) to the satellite in the second beam direction. The second beam direction is different from the first beam direction. Therefore, the network device determines, based on the first beam direction and the second beam direction, that the relative location of the terminal device to the satellite changes. Further, the network device determines, based on the second beam direction, the third reference signal corresponding to the second receiving time difference.

For example, the terminal device does not limit a reference signal used for positioning measurement. When the terminal device receives, on a beam 1 of the satellite, a plurality of SSBs with an SSB index 0 (also referred to as SSB0s), the terminal device records receiving time of these SSB0s (for example, SSBO' and SSB0"), and then determines a receiving time difference between adjacent SSB0s (for example, a receiving time difference between the SSBO' and the SSB0"). The terminal device sends the receiving time difference between the SSBO' and the SSB0" to the satellite on the beam 1, and determines sending time of the SSBO' and sending time of the SSB0".

Then, as the relative location of the terminal device to the satellite changes, for example, the satellite moves or the terminal device moves, when the terminal device receives, on a beam 2 of the satellite, an SSB with an SSB index 1 (also referred to as SSB1), the terminal device records receiving time of the SSB1. The terminal device determines a receiving time difference between the SSB0" and the SSB1 based on the receiving time of the SSB0" and the receiving time of the SSB1. Then, the terminal device sends the receiving time difference between the SSB0" and the SSB1 to the satellite on the beam 2. The network device determines, based on the beam 2, that the terminal device performs beam switching, and then determines that the receiving time difference between the SSB0" and the SSB1 corresponds to the SSB0" and the SSB1, to further determine the sending time of the SSB0" and the sending time of the SSB1.

(BB) When the satellite uses a wide beam as the broadcast beam, the SSB index is used to distinguish between beam directions corresponding to SSBs. When the satellite uses the wide beam as the broadcast beam, reference signals used for positioning measurement may have a same SSB index, or may have different SSB indexes. This is not limited in this embodiment of this application. In this case, the terminal device may send, to the satellite, an interval for measuring a receiving time difference. For example, the terminal device determines receiving time of a received SSB at an interval of 20 ms, and calculates a receiving time difference between two adjacent SSBs. The terminal device sends the first receiving time difference to the network device (for example, the satellite), and the terminal device may further send the first time interval (20 ms) to the network device. The network device determines, based on the first time interval and the first receiving time difference, an SSB corresponding to the first time interval, to further determine sending time of the SSB.

It should be noted that the terminal device may report, to the network device, a plurality of receiving time differences between reference signals used for positioning measurement, such as the first receiving time difference and the second receiving time difference, in a plurality of implementations, which are separately described below.
(1) Each time the terminal device determines a receiving time difference, the terminal device sends the receiving time difference to the network device. For example, the terminal device sends the first receiving time difference to the network device after the terminal device determines the first receiving time difference. The terminal device sends the second receiving time difference to the network device after the terminal device determines the second receiving time difference. The rest can be deduced by analogy.
(2) After determining a plurality of receiving time differences, the terminal device sends the plurality of receiving time differences to the network device. For example, after determining the first receiving time difference, the terminal device waits for a period of time. After the terminal device determines the second receiving time difference, the terminal device sends the first receiving time difference and the second receiving time difference to the network device. The rest can be deduced by analogy.
(3) After determining a receiving time difference, the terminal device sends the receiving time difference to the network device based on an indication of the network device.

The first receiving time difference and the second receiving time difference may be reported independently of each other. For example, if the first receiving time difference is 5 ms, and the second receiving time difference is 8 ms, the first receiving time difference 5 ms and the second receiving time difference 8 ms are sent to the network device by the terminal device.

Alternatively, the second receiving time difference may be a relative value relative to the first receiving time difference. For example, if the first receiving time difference is 5 ms, and the second receiving time difference is 8 ms, the first receiving time difference 5 ms and the second receiving time difference +3 ms are sent to the network device by the terminal device.

It should be noted that, when the network device in step 403 includes the satellite, after the satellite obtains the first receiving time difference, the satellite may locally perform subsequent steps 404 to 406; or the satellite may send the first receiving time difference to the ground base station or a core network. The ground base station or the core network performs subsequent steps 404 to 406.

404: The network device obtains the first time interval.

In this embodiment, after the network device receives the first receiving time difference from the terminal device, the network device determines, based on the first receiving time difference, reference signals (namely, the first reference signal and the second reference signal) that correspond to the first receiving time difference. Then, the network device determines the sending time of the first reference signal and the sending time of the second reference signal, to further determine a time interval between the sending time of the two reference signals, that is, obtain the first time interval.

In a possible implementation, for example, the first reference signal and the second reference signal are SSBs (or PSSs or SSSs). The network device may determine, based on a beam direction corresponding to the first receiving time difference, the reference signals that correspond to the first receiving time difference.

In another possible implementation, the network device may alternatively determine, based on the third indication information sent by the terminal device, the first reference signal and the second reference signal that correspond to the first receiving time difference. The third indication information explicitly indicates the reference signals that correspond to the first receiving time difference.

When determining the first reference signal and the second reference signal that correspond to the first receiving time difference, the network device further searches for the sending time of the first reference signal and the sending time of the second reference signal, and obtains the first time interval through calculation based on the sending time of the first reference signal and the sending time of the second reference signal.

In still another possible implementation, the network device may alternatively determine, based on the second indication information sent by the terminal device, that the terminal device receives the first reference signal and the second reference signal based on the first time interval.

Similarly, after receiving the second receiving time difference from the terminal device, the network device obtains, by using the foregoing method, the second reference signal and the third reference signal that correspond to the second receiving time difference. Further, the network device obtains a second time interval (to be specific, a difference between sending time at which the satellite sends the second reference signal and sending time at which the satellite sends the third reference signal) based on the second reference signal and the third reference signal.

405: The network device obtains the first coordinates and the second coordinates.

An execution sequence of step 404 and step 405 is not limited.

In this embodiment, after the network device receives the first receiving time difference from the terminal device, the network device determines, based on the first receiving time difference, reference signals (namely, the first reference signal and the second reference signal) that correspond to the first receiving time difference. Further, location information (namely, the first coordinates) of the satellite when the satellite sends the first reference signal is determined, and location information (namely, the second coordinates) of the satellite when the satellite sends the second reference signal is determined.

After receiving the second receiving time difference from the terminal device, the network device may obtain third coordinates, where the third coordinates indicate a location at which the satellite sends the third reference signal. The rest may be deduced by analogy, and details are not described herein.

406: The network device determines the first location information based on the first coordinates, the second coordinates, the first time interval, and the first receiving time difference, where the first location information is the location information of the terminal device.

In this embodiment, specifically, the network device that calculates the first location information in step 406 may be the satellite, the ground base station, the core network, or the like. This is not limited in this embodiment of this application.

Let the first coordinates be (X1, Y1, Z1), the second coordinates be (X2, Y2, Z2), the first time interval be T1, and the first receiving time difference be ΔT1. c is the speed of light. The first location information is set to (X, Y, Z), where X in (X, Y, Z) may be a longitude, Y may be a latitude, and Z may be a height. The first location information is obtained through calculation in the following manner: (sqrt ((X- X1) ^ 2 + (Y - Y1) ^ 2 + (Z - Z1) ^ 2))/c - (sqrt ((X - X2) ^ 2 + (Y - Y2) ^ 2 + (Z - Z2) ^ 2))/c = ΔT1 - T1.

When the first reference signal and the second reference signal that are sent by the satellite are from the ground base station, a feeding delay from the satellite to the ground base station further needs to be considered for calculating the location information of the terminal device. Let a first feeding delay be D1, and a second feeding delay be D2, a specific calculation method is as follows: (sqrt ((X - X1) ^ 2 + (Y - Y1) ^ 2 + (Z - Z1) ^ 2) + D1)/c - (sqrt ((X - X2) ^ 2 + (Y - Y2) ^ 2 + (Z - Z2) ^ 2) + D2)/c = ΔT1 - T1.

To improve accuracy of the first location information, the first location information may alternatively be calculated with reference to more receiving time differences and location information of the satellite.

Specifically, the network device receives the second receiving time difference from the terminal device, where the second receiving time difference indicates the difference between the time at which the terminal device receives the second reference signal and the time at which the terminal device receives the third reference signal; and the network device obtains the second time interval, where the second time interval indicates a time interval between the moment at which the satellite sends the second reference signal and the moment at which the satellite sends the third reference signal; the network device obtains the third coordinates, where the third coordinates indicate the location at which the satellite sends the third reference signal. When the third reference signal sent by the satellite is from the ground base station, the network device further needs to obtain a third feeding delay, where the third feeding delay is a transmission delay of the third reference signal from the ground base station to the satellite.

The network device receives the third receiving time difference from the terminal device, where the third receiving time difference indicates the difference between the time at which the terminal device receives the third reference signal and the time at which the terminal device receives the fourth reference signal; the network device obtains a third time interval, where the third time interval indicates a time interval between the moment at which the satellite sends the third reference signal and a moment at which the satellite sends the fourth reference signal; and the network device obtains fourth coordinates, where the fourth coordinates indicate a location at which the satellite sends the fourth reference signal. When the fourth reference signal sent by the satellite is from the ground base station, the network device further needs to obtain a fourth feeding delay, where the fourth feeding delay is a transmission delay of the fourth reference signal from the ground base station to the satellite.

Let the third feeding delay be D3, the second receiving time difference be ΔT2, the second time interval be T2, the third coordinates be (X3, Y3, Z3), the fourth feeding delay be D4, the third receiving time difference be ΔT3, the third time interval be T3, and the fourth coordinates be (X4, Y4, Z4). A specific calculation method is as follows: (sqrt ((X - X1) ^ 2 + (Y - Y1) ^ 2 + (Z - Z1) ^ 2) + D1)/c - (sqrt ((X - X2) ^ 2 + (Y - Y2) ^ 2 + (Z - Z2) ^ 2) + D2)/c = ΔT1 - T1; (sqrt ((X - X2) ^ 2 + (Y - Y2) ^ 2 + (Z - Z2) ^ 2) + D2)/c - (sqrt ((X - X3) ^ 2 + (Y - Y3) ^ 2 + (Z - Z3) ^ 2) + D3)/c = ΔT2 - T2; (sqrt ((X- X3) ^ 2 + (Y -Y3) ^ 2 + (Z - Z3) ^ 2) + D3)/c - (sqrt ((X - X4) ^ 2 + (Y - Y4) ^ 2 + (Z - Z4) ^ 2) + D4)/c = ΔT3 - T3. The first location information (X, Y, Z) may be obtained by using the foregoing three equations.

After step 406, the network device may further verify, based on the first location information, whether the location information reported by the terminal device is accurate, to improve communication security. Specifically, the network device receives second location information from the terminal device, where the second location information is location information that is of the terminal device and that is obtained by the terminal device through measurement; and the network device verifies, by using the first location information, whether the second location information is accurate.

In this embodiment of this application, the satellite sends the first reference signal and the second reference signal to the terminal device, and the network device obtains a receiving time difference between the terminal device receiving the first reference signal and the second reference signal. The network device determines the location information of the terminal device based on the location information of the satellite when the satellite sends the first reference signal, the location information of the satellite when the satellite sends the second reference signal, a sending time interval between the satellite sending the first reference signal and the second reference signal, and the receiving time difference between the first reference signal and the second reference signal. According to the foregoing method, positioning measurement of the terminal device in a satellite communication scenario can be implemented without depending on a GNSS capability of the terminal device. The first reference signal and the second reference signal may be any one of a primary synchronization signal PSS, a secondary synchronization signal SSS, a synchronization signal/physical broadcast channel block SSB, a demodulation reference signal DMRS, a channel state information reference signal CSI-RS, or a phase tracking reference signal PTRS. Therefore, communication resources can be saved, and positioning measurement of the terminal device can be implemented.

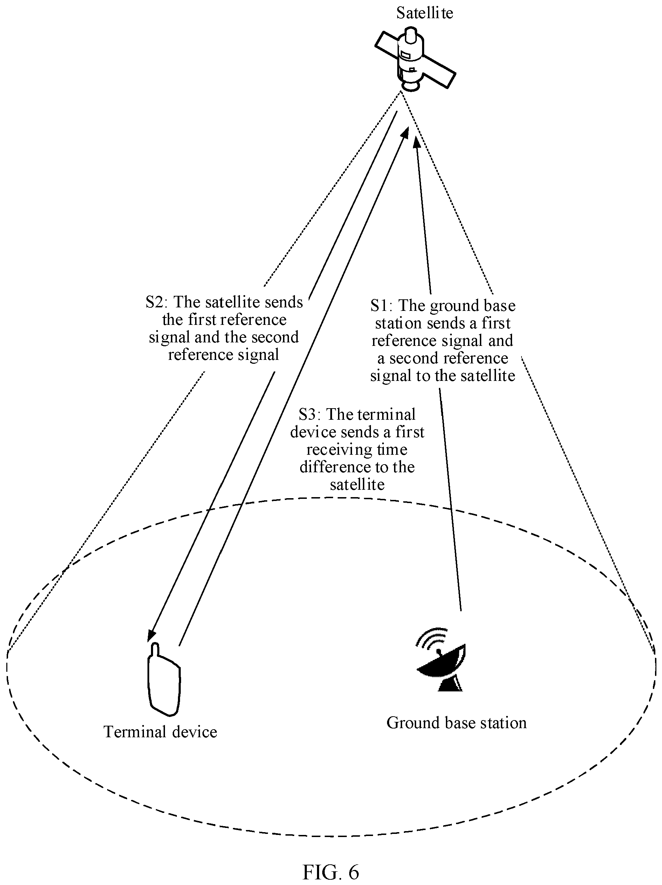

With reference to the foregoing embodiments, the following describes an application scenario provided in embodiments of this application by using an example in which the first reference signal and the second reference signal are SSBs, PSSs, or SSSs. FIG. 6 is a diagram of an application scenario according to an embodiment of this application. The application scenario provided in this embodiment of this application includes the following steps.

S1: A ground base station sends a first reference signal and a second reference signal to a satellite.

S2: The satellite sends the first reference signal and the second reference signal.

S3: A terminal device sends a first receiving time difference to the satellite.

After step S3, the satellite may obtain location information of the terminal device through calculation based on the first receiving time difference and other information. Alternatively, the satellite may send the first receiving time difference to the ground base station or a core network, and the ground base station or the core network obtains the location information of the terminal device through calculation. This is not limited in this embodiment of this application.

The scenario shown in FIG. 6 may be a scenario in which no beam switching occurs on the terminal device, or may be a scenario in which a broadcast beam of the satellite is a wide beam.

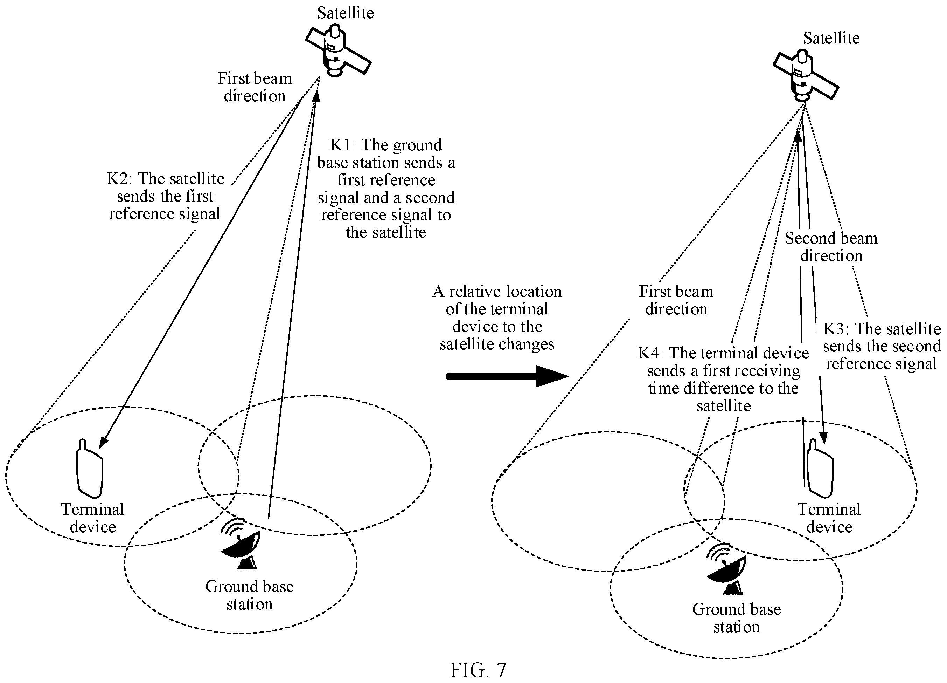

FIG. 7 is a diagram of an application scenario according to an embodiment of this application. The application scenario provided in this embodiment of this application includes the following steps.

K1: A ground base station sends a first reference signal and a second reference signal to a satellite.

K2: The satellite sends the first reference signal in a first beam direction.

When a relative location of a terminal device to the satellite changes, step K3 is performed, where the satellite sends the second reference signal in a second beam direction. The second beam direction is different from the first beam direction.

K4: The terminal device sends a first receiving time difference to the satellite.

After step K4, the satellite may obtain location information of the terminal device through calculation based on the first receiving time difference and other information. Alternatively, the satellite may send the first receiving time difference to the ground base station or a core network, and the ground base station or the core network obtains the location information of the terminal device through calculation. This is not limited in this embodiment of this application.

The foregoing mainly describes the solutions provided in embodiments of this application from a perspective of methods. It may be understood that, to implement the foregoing functions, a communication apparatus includes corresponding hardware structures and/or software modules for performing the functions. A person of ordinary skill in the art should easily be aware that, in combination with the examples described in embodiments disclosed in this specification, modules, algorithms, and steps may be implemented by hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

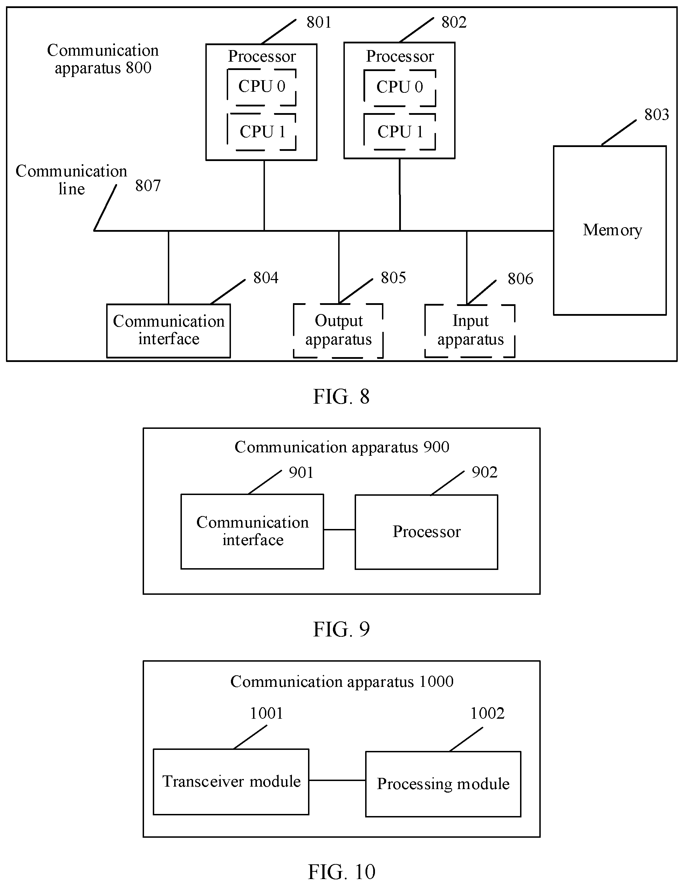

FIG. 8 is a diagram of a hardware structure of a communication apparatus according to an embodiment of this application. As shown in FIG. 8, the communication apparatus may include:
The communication apparatus includes at least one processor 801, a communication line 807, a memory 803, and at least one communication interface 804.

The processor 801 may be a general-purpose central processing unit (central processing unit, CPU), a microprocessor, an application-specific integrated circuit (application-specific integrated circuit, server IC), or one or more integrated circuits configured to control program execution in the solutions of this application.

The communication line 807 may include a path for transmitting information between the foregoing components.

The communication interface 804 is any apparatus such as a transceiver, and is configured to communicate with another apparatus or a communication network, for example, the Ethernet.

The memory 803 may be a read-only memory (read-only memory, ROM) or another type of static storage apparatus that can store static information and instructions, or a random access memory (random access memory, RAM) or another type of dynamic storage apparatus that can store information and instructions. The memory may exist independently, and is connected to the processor through the communication line 807. The memory may alternatively be integrated with the processor.

The memory 803 is configured to store computer-executable instructions for executing the solution of this application, and the processor 801 controls the execution. The processor 801 is configured to execute the computer-executable instructions stored in the memory 803, to implement the positioning method provided in the foregoing embodiments of this application.

Optionally, the computer-executable instructions in this embodiment of this application may also be referred to as application program code. This is not specifically limited in this embodiment of this application.

During specific implementation, in an embodiment, the communication apparatus may include a plurality of processors, for example, the processor 801 and a processor 802 in FIG. 8. Each of the processors may be a single-core (single-CPU) processor, or may be a multi-core (multi-CPU) processor. The processor herein may be one or more apparatuses, circuits, and/or processing cores configured to process data (such as computer program instructions).

During specific implementation, in an embodiment, the communication apparatus may further include an output apparatus 805 and an input apparatus 806. The output apparatus 805 communicates with the processor 801, and may display information in a plurality of manners. The input apparatus 806 communicates with the processor 801, and may receive input from a user in a plurality of manners. For example, the input apparatus 806 may be a mouse, a touchscreen apparatus, or a sensing apparatus.

When the communication apparatus is a terminal device, the processor 802 in the communication apparatus may include one or more processing units. For example, the processor 802 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the communication apparatus 800. The controller may generate an operation control signal based on an instruction operation code and a time sequence signal, to complete control of instruction reading and instruction execution.

A memory may be further disposed in the processor 802, and is configured to store instructions and data. In some embodiments, the memory in the processor 802 is a cache. The memory may store instructions or data that has been used or cyclically used by the processor 802. If the processor 802 needs to use the instructions or the data again, the processor 802 may directly invoke the instructions or the data from the memory. This avoids repeated access, reduces waiting time of the processor 802, and therefore improves system efficiency.

In some embodiments, the processor 802 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that, an interface connection relationship between the modules shown in this embodiment of this application is merely an example for description, and does not constitute a limitation on a structure of the communication apparatus 800. In some other embodiments of this application, the communication apparatus 800 may alternatively use an interface connection mode different from an interface connection mode in the foregoing embodiment, or a combination of a plurality of interface connection modes.

A wireless communication function of the communication apparatus 800 may be implemented through an antenna 1, an antenna 2, a mobile communication module, a wireless communication module, a modem processor, a baseband processor, and the like.

In some feasible implementations, the communication apparatus 800 may communicate with another device by using the wireless communication function.

The antenna 1 and the antenna 2 are configured to transmit and receive an electromagnetic wave signal. Each antenna in the communication apparatus 800 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module may provide a wireless communication solution that includes 1G/3G/4G/5G or the like and that is applied to the communication apparatus 800. The mobile communication module may include at least one filter, a switch, a power amplifier, a low noise amplifier (low noise amplifier, LNA), and the like. The mobile communication module may receive an electromagnetic wave through the antenna 1, perform processing such as filtering or amplification on the received electromagnetic wave, and transmit a processed electromagnetic wave to the modem processor for demodulation. The mobile communication module may further amplify a signal modulated by the modem processor, and convert an amplified signal into an electromagnetic wave for radiation through the antenna 2. In some embodiments, at least some functional modules of the mobile communication module may be disposed in the processor 802. **In** some embodiments, at least some functional modules of the mobile communication module may be disposed in a same device as at least some modules of the processor 802.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to a speaker, a receiver, or the like), or displays an image or a video by using a display. **In** some embodiments, the modem processor may be an independent component. **In** some other embodiments, the modem processor may be independent of the processor 802, and is disposed in a same device as the mobile communication module or another functional module.

The communication apparatus 800 may implement a display function by using the GPU, the display, the application processor, and the like. The GPU is a microprocessor for image processing, and connects the display to the application processor. The GPU is configured to perform mathematical and geometric computation, and render an image. The processor 802 may include one or more GPUs, which execute program instructions to generate or change display information.

An external memory interface may be used to connect to an external storage card, for example, a Micro SD card, to extend a storage capability of the communication apparatus 800. The external storage card communicates with the processor 802 through the external memory interface, to implement a data storage function. For example, files such as music and videos are stored in the external storage card.

An internal memory may be configured to store computer-executable program code. The executable program code includes instructions. The processor 802 runs the instructions stored in the internal memory, to perform data processing and various function applications of the communication apparatus 800. The internal memory may include a program storage area and a data storage area. The program storage area may store an operating system, an application required by at least one function (for example, a voice playing function or an image playing function), and the like. The data storage area may store data (for example, audio data and contacts) and the like created in a process of using the communication apparatus 800. **In** addition, the internal memory may include a high-speed random access memory, or may include a nonvolatile memory, for example, at least one magnetic disk storage device, a flash storage device, or a universal flash storage (universal flash storage, UFS).

The communication apparatus may be a general-purpose apparatus or a dedicated apparatus. During specific implementation, the communication apparatus may be a desktop computer, a portable computer, a network server, a wireless terminal apparatus, an embedded apparatus, or an apparatus having a structure similar to that in FIG. 8. A type of the communication apparatus is not limited in this embodiment of this application. The communication apparatus may be a cloud server, or may be a terminal device. This is not limited herein.

It may be understood that, the structure shown in this embodiment of this application does not constitute a specific limitation on the communication apparatus 800. In some other embodiments of this application, the communication apparatus 800 may include more or fewer components than those shown in the figure, or a combination of a part of the components, or splits from a part of the components, or an arrangement of different components. The components shown in the figure may be implemented by hardware, software, or a combination of software and hardware.

In embodiments of this application, the communication apparatus (including a server and a terminal device) may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

FIG. 9 is a diagram of an embodiment of a communication apparatus 900 according to an embodiment of this application. The communication apparatus 900 includes a communication interface 901, and a processor 902 connected to the communication interface 901. The processor is configured to perform any one of the implementations shown in the foregoing method embodiments.

In a possible implementation, the communication apparatus 900 is used as a network device, and the communication apparatus 900 includes a communication interface 901 and a processor 902.

The communication interface 901 is configured to receive a first receiving time difference from a terminal device, where the first receiving time difference indicates a difference between time at which the terminal device receives a first reference signal and time at which the terminal device receives a second reference signal, the first reference signal is sent to the terminal device by a satellite, and the second reference signal is sent to the terminal device by the satellite.

The communication interface 901 is further configured to obtain a first time interval, where the first time interval indicates a time interval between a moment at which the satellite sends the first reference signal and a moment at which the satellite sends the second reference signal.

The communication interface 901 is further configured to obtain first coordinates and second coordinates, where the first coordinates indicate a location at which the satellite sends the first reference signal, and the second coordinates indicate a location at which the satellite sends the second reference signal.

The processor 902 is configured to determine first location information based on the first coordinates, the second coordinates, the first time interval, and the first receiving time difference, where the first location information is location information that is of the terminal device and that is obtained by the network device through measurement.

In a possible implementation, the network device includes a ground base station and the satellite.

Alternatively, the network device includes the satellite.

In a possible implementation, the first reference signal and the second reference signal that are sent to the terminal device by the satellite are from the ground base station.

In a possible implementation,
the communication interface 901 is further configured to obtain a first feeding delay and a second feeding delay, where the first feeding delay is a transmission delay of the first reference signal from the ground base station to the satellite, and the second feeding delay is a transmission delay of the second reference signal from the ground base station to the satellite.

That the processor 902 is further configured to determine first location information based on the first coordinates, the second coordinates, the first receiving time difference, and the first time interval includes:
The processor 902 is further configured to determine the first location information based on the first coordinates, the second coordinates, the first receiving time difference, the first time interval, the first feeding delay, and the second feeding delay.

In a possible implementation,
the communication interface 901 is further configured to receive second location information from the terminal device, where the second location information is location information that is of the terminal device and that is obtained by the terminal device through measurement.

The processor 902 is further configured to verify, by using the first location information, whether the second location information is accurate.

In a possible implementation,
the processor 902 is further configured to determine, based on a first beam direction, the first reference signal and the second reference signal that correspond to the first receiving time difference, where the first beam direction is a beam direction in which the terminal device sends the first receiving time difference to the satellite.

The processor 902 is further configured to determine the first time interval based on the sending time of the first reference signal and the sending time of the second reference signal.

In a possible implementation,
the communication interface 901 is further configured to receive a second receiving time difference from the terminal device, where the second receiving time difference indicates a difference between the time at which the terminal device receives the second reference signal and time at which the terminal device receives a third reference signal.

The communication interface 901 is further configured to obtain a second time interval, where the second time interval indicates a time interval between the moment at which the satellite sends the second reference signal and a moment at which the satellite sends the third reference signal.

The communication interface 901 is further configured to obtain third coordinates, where the third coordinates indicate a location at which the satellite sends the third reference signal.

The processor 902 is further configured to determine the first location information based on the first coordinates, the second coordinates, the third coordinates, the first time interval, the second time interval, the first receiving time difference, and the second receiving time difference.

In a possible implementation,
the processor 902 is further configured to determine, based on a second beam direction, the second reference signal and the third reference signal that correspond to the second receiving time difference, where the second beam direction is a beam direction in which the terminal device sends the second receiving time difference to the satellite.

The processor 902 is further configured to determine the second time interval based on the sending time of the second reference signal and the sending time of the third reference signal.

In a possible implementation,
an index of the first reference signal is different from an index of the third reference signal when the second beam direction is different from the first beam direction.

In a possible implementation,
the communication interface 901 is further configured to send first indication information to the terminal device, where the first indication information indicates that the first reference signal and the second reference signal are used for positioning measurement.

In a possible implementation,
the processor 902 is further configured to determine, from a plurality of reference signals based on first configuration information, the first reference signal and the second reference signal for positioning measurement.

In a possible implementation,
the communication interface 901 is further configured to send second indication information to the terminal device, where the second indication information indicates the terminal device to receive the first reference signal and the second reference signal based on the first time interval.

In a possible implementation,
the processor 902 is further configured to determine, based on second configuration information, the first time interval between the satellite sending the first reference signal and the second reference signal.

In a possible implementation,
the communication interface 901 is further configured to receive third indication information from the terminal device, where the third indication information indicates that the first receiving time difference corresponds to the first reference signal and the second reference signal.

In a possible implementation,
the processor 902 is further configured to determine, based on the third indication information, that the first receiving time difference corresponds to the first reference signal and the second reference signal.

The processor 902 is further configured to determine the first time interval based on the sending moment at which the satellite sends the first reference signal and the sending moment at which the satellite sends the second reference signal.

In a possible implementation, the first reference signal carries the sending time at which the satellite sends the first reference signal, and the second reference signal carries the sending time at which the satellite sends the second reference signal.

In a possible implementation, the first reference signal and/or the second reference signal are/is any one of the following reference signals:
a primary synchronization signal PSS, a secondary synchronization signal SSS, a synchronization signal/physical broadcast channel block SSB, a demodulation reference signal DMRS, a channel state information reference signal CSI-RS, or a phase tracking reference signal PTRS.

In another possible implementation, the communication apparatus 900 is used as a terminal device, and the communication apparatus 900 includes a communication interface 901 and a processor 902.

The communication interface 901 is configured to receive a first reference signal sent by a satellite.

The communication interface 901 is further configured to receive a second reference signal sent by the satellite.

The terminal device determines a first receiving time difference, where the first receiving time difference indicates a difference between time at which the terminal device receives the first reference signal and time at which the terminal device receives the second reference signal.

The communication interface 901 is further configured to send the first receiving time difference to a network device, so that the network device determines first location information based on the first receiving time difference, where the first location information is location information of the terminal device.

In a possible implementation,
the communication interface 901 is further configured to obtain second location information, where the second location information is location information that is of the terminal device and that is obtained by the terminal device through measurement.

The communication interface 901 is further configured to send second location information to the network device.

In a possible implementation,
the communication interface 901 is further configured to receive a third reference signal sent by the satellite.

The processor 902 is configured to determine a second receiving time difference, where the second receiving time difference indicates a difference between the time at which the terminal device receives the second reference signal and time at which the terminal device receives the third reference signal.

The communication interface 901 is further configured to send the second receiving time difference to the network device, so that the network device determines the first location information based on the first receiving time difference and the second receiving time difference.

In a possible implementation,
the processor 902 is further configured to determine, from a plurality of reference signals based on third configuration information, the first reference signal and the second reference signal for positioning measurement, where the third configuration information indicates the terminal device to measure the receiving moment of the first reference signal and the receiving moment of the second reference signal.

In a possible implementation,
the communication interface 901 is further configured to receive first indication information sent by the network device, where the first indication information indicates that the first reference signal and the second reference signal are used for positioning measurement.

The processor 902 is further configured to determine, based on the first indication information, the first reference signal and the second reference signal whose receiving moments need to be measured.

In a possible implementation,
the processor 902 is further configured to determine, based on fourth configuration information, the first time interval between receiving the first reference signal and the second reference signal, where the fourth configuration information indicates the first time interval.

The communication interface 901 is further configured to receive, based on the fourth configuration information, the second reference signal after waiting for the first time interval after receiving the first reference signal.

In a possible implementation,
the communication interface 901 is further configured to receive second indication information sent by the network device, where the second indication information indicates the terminal device to receive the first reference signal and the second reference signal based on the first time interval.

The communication interface 901 is further configured to receive, based on the second indication information, the second reference signal after waiting for the first time interval after receiving the first reference signal.

In a possible implementation,
the communication interface 901 is further configured to send third indication information to the network device, where the third indication information indicates the terminal device to receive the first reference signal and the second reference signal based on the first receiving time difference.

In a possible implementation, the first reference signal carries sending time at which the satellite sends the first reference signal, and the second reference signal carries sending time at which the satellite sends the second reference signal.

The processor 902 is further configured to determine, based on the first reference signal, first coordinates of the satellite when the satellite sends the first reference signal.

The processor 902 is further configured to determine, based on the second reference signal, second coordinates of the satellite when the satellite sends the second reference signal.

The processor 902 is further configured to determine the first time interval based on the sending time of the first reference signal and the sending time of the second reference signal.

The processor 902 is further configured to determine the first location information based on the first time interval, the first receiving time difference, the first coordinates, and the second coordinates.

In a possible implementation,
the processor 902 is further configured to initiate random access to the network device based on the first location information.

The following describes in detail a communication apparatus in this application. FIG. 10 is a diagram of an embodiment of a communication apparatus 1000 according to an embodiment of this application.

In a possible implementation, the communication apparatus 1000 is used as a network device, and the communication apparatus 1000 includes:
a transceiver module 1001 and a processing module 1002 connected to the transceiver module 1001.

The transceiver module 1001 is configured to receive a first receiving time difference from a terminal device, where the first receiving time difference indicates a difference between time at which the terminal device receives a first reference signal and time at which the terminal device receives a second reference signal, the first reference signal is sent to the terminal device by a satellite, and the second reference signal is sent to the terminal device by the satellite.

The transceiver module 1001 is further configured to obtain a first time interval, where the first time interval indicates a time interval between a moment at which the satellite sends the first reference signal and a moment at which the satellite sends the second reference signal.

The transceiver module 1001 is further configured to obtain first coordinates and second coordinates, where the first coordinates indicate a location at which the satellite sends the first reference signal, and the second coordinates indicate a location at which the satellite sends the second reference signal.

The processing module 1002 is configured to determine first location information based on the first coordinates, the second coordinates, the first time interval, and the first receiving time difference, where the first location information is location information that is of the terminal device and that is obtained by the network device through measurement.

In a possible implementation, the network device includes a ground base station and the satellite.

Alternatively, the network device includes the satellite.

In a possible implementation, the first reference signal and the second reference signal that are sent to the terminal device by the satellite are from the ground base station.

In a possible implementation,
the transceiver module 1001 is further configured to obtain a first feeding delay and a second feeding delay, where the first feeding delay is a transmission delay of the first reference signal from the ground base station to the satellite, and the second feeding delay is a transmission delay of the second reference signal from the ground base station to the satellite.

That the processing module 1002 is further configured to determine first location information based on the first coordinates, the second coordinates, the first receiving time difference, and the first time interval includes:
The processing module 1002 is further configured to determine the first location information based on the first coordinates, the second coordinates, the first receiving time difference, the first time interval, the first feeding delay, and the second feeding delay.

In a possible implementation,
the transceiver module 1001 is further configured to receive second location information from the terminal device, where the second location information is location information that is of the terminal device and that is obtained by the terminal device through measurement.

The processing module 1002 is further configured to verify, by using the first location information, whether the second location information is accurate.

In a possible implementation,
the processing module 1002 is further configured to determine, based on a first beam direction, the first reference signal and the second reference signal that correspond to the first receiving time difference, where the first beam direction is a beam direction in which the terminal device sends the first receiving time difference to the satellite.

The processing module 1002 is further configured to determine the first time interval based on the sending time of the first reference signal and the sending time of the second reference signal.

In a possible implementation,
the transceiver module 1001 is further configured to receive a second receiving time difference from the terminal device, where the second receiving time difference indicates a difference between the time at which the terminal device receives the second reference signal and time at which the terminal device receives a third reference signal.

The transceiver module 1001 is further configured to obtain a second time interval, where the second time interval indicates a time interval between the moment at which the satellite sends the second reference signal and a moment at which the satellite sends the third reference signal.

The transceiver module 1001 is further configured to obtain third coordinates, where the third coordinates indicate a location at which the satellite sends the third reference signal.

The processing module 1002 is further configured to determine the first location information based on the first coordinates, the second coordinates, the third coordinates, the first time interval, the second time interval, the first receiving time difference, and the second receiving time difference.

In a possible implementation,
the processing module 1002 is further configured to determine, based on a second beam direction, the second reference signal and the third reference signal that correspond to the second receiving time difference, where the second beam direction is a beam direction in which the terminal device sends the second receiving time difference to the satellite.

The processing module 1002 is further configured to determine the second time interval based on the sending time of the second reference signal and the sending time of the third reference signal.

In a possible implementation,
an index of the first reference signal is different from an index of the third reference signal when the second beam direction is different from the first beam direction.

In a possible implementation,
the transceiver module 1001 is further configured to send first indication information to the terminal device, where the first indication information indicates that the first reference signal and the second reference signal are used for positioning measurement.

In a possible implementation,
the processing module 1002 is further configured to determine, from a plurality of reference signals based on first configuration information, the first reference signal and the second reference signal for positioning measurement.

In a possible implementation,
the transceiver module 1001 is further configured to send second indication information to the terminal device, where the second indication information indicates the terminal device to receive the first reference signal and the second reference signal based on the first time interval.

In a possible implementation,
the processing module 1002 is further configured to determine, based on second configuration information, the first time interval between the satellite sending the first reference signal and the second reference signal.

In a possible implementation,
the transceiver module 1001 is further configured to receive third indication information from the terminal device, where the third indication information indicates that the first receiving time difference corresponds to the first reference signal and the second reference signal.

In a possible implementation,
the processing module 1002 is further configured to determine, based on the third indication information, that the first receiving time difference corresponds to the first reference signal and the second reference signal.

The processing module 1002 is further configured to determine the first time interval based on the sending moment at which the satellite sends the first reference signal and the sending moment at which the satellite sends the second reference signal.

In a possible implementation, the first reference signal carries the sending time at which the satellite sends the first reference signal, and the second reference signal carries the sending time at which the satellite sends the second reference signal.

In a possible implementation, the first reference signal and/or the second reference signal are/is any one of the following reference signals:
a primary synchronization signal PSS, a secondary synchronization signal SSS, a synchronization signal/physical broadcast channel block SSB, a demodulation reference signal DMRS, a channel state information reference signal CSI-RS, or a phase tracking reference signal PTRS.

In another possible implementation, the communication apparatus 1000 is used as a terminal device, and the communication apparatus 1000 includes a transceiver module 1001 and a processing module 1002.

The transceiver module 1001 is configured to receive a first reference signal sent by a satellite.

The transceiver module 1001 is further configured to receive a second reference signal sent by the satellite.

The terminal device determines a first receiving time difference, where the first receiving time difference indicates a difference between time at which the terminal device receives the first reference signal and time at which the terminal device receives the second reference signal.

The transceiver module 1001 is further configured to send the first receiving time difference to a network device, so that the network device determines first location information based on the first receiving time difference, where the first location information is location information of the terminal device.

In a possible implementation,
the transceiver module 1001 is further configured to obtain second location information, where the second location information is location information that is of the terminal device and that is obtained by the terminal device through measurement.

The transceiver module 1001 is further configured to send the second location information to the network device.

In a possible implementation,
the transceiver module 1001 is further configured to receive a third reference signal sent by the satellite.

The processing module 1002 is configured to determine a second receiving time difference, where the second receiving time difference indicates a difference between the time at which the terminal device receives the second reference signal and time at which the terminal device receives the third reference signal.

The transceiver module 1001 is further configured to send the second receiving time difference to the network device, so that the network device determines the first location information based on the first receiving time difference and the second receiving time difference.

In a possible implementation,
the processing module 1002 is further configured to determine, from a plurality of reference signals based on third configuration information, the first reference signal and the second reference signal for positioning measurement, where the third configuration information indicates the terminal device to measure the receiving moment of the first reference signal and the receiving moment of the second reference signal.

In a possible implementation,
the transceiver module 1001 is further configured to receive first indication information sent by the network device, where the first indication information indicates that the first reference signal and the second reference signal are used for positioning measurement.

The processing module 1002 is further configured to determine, based on the first indication information, the first reference signal and the second reference signal whose receiving moments need to be measured.

In a possible implementation,
the processing module 1002 is further configured to determine, based on fourth configuration information, the first time interval between receiving the first reference signal and the second reference signal, where the fourth configuration information indicates the first time interval.

The transceiver module 1001 is further configured to receive, based on the fourth configuration information, the second reference signal after waiting for the first time interval after receiving the first reference signal.

In a possible implementation,
the transceiver module 1001 is further configured to receive second indication information sent by the network device, where the second indication information indicates the terminal device to receive the first reference signal and the second reference signal based on the first time interval.

The transceiver module 1001 is further configured to receive, based on the second indication information, the second reference signal after waiting for the first time interval after receiving the first reference signal.

In a possible implementation,
the transceiver module 1001 is further configured to send third indication information to the network device, where the third indication information indicates the terminal device to receive the first reference signal and the second reference signal based on the first receiving time difference.

In a possible implementation, the first reference signal carries sending time at which the satellite sends the first reference signal, and the second reference signal carries sending time at which the satellite sends the second reference signal.

The processing module 1002 is further configured to determine, based on the first reference signal, first coordinates of the satellite when the satellite sends the first reference signal.

The processing module 1002 is further configured to determine, based on the second reference signal, second coordinates of the satellite when the satellite sends the second reference signal.

The processing module 1002 is further configured to determine the first time interval based on the sending time of the first reference signal and the sending time of the second reference signal.

The processing module 1002 is further configured to determine the first location information based on the first time interval, the first receiving time difference, the first coordinates, and the second coordinates.

In a possible implementation,
the processing module 1002 is further configured to initiate random access to the network device based on the first location information.

It should be noted that the communication apparatus mentioned in this embodiment of this application may be, for example, a terminal device or a network device such as a satellite or a ground base station, may be a part of components on the network device or the terminal device, for example, a board or a line card on the network device, may be a functional module on the network device or the terminal device, or may be a chip configured to implement the method in this application. This is not specifically limited in this embodiment of this application. When the communication apparatus is a chip, the transceiver module 1001 configured to implement the method may be, for example, an interface circuit of the chip, and the processing module 1002 may be a processing circuit having a processing function in the chip. Communication apparatuses may be directly connected, for example, but not limited to, through an air interface, an Ethernet cable, or an optical cable.

It should be understood that the communication apparatuses in the foregoing various product forms separately have any function of the terminal device or the network device in the foregoing method embodiments. Details are not described herein.

An embodiment of this application further provides a communication apparatus. The communication apparatus includes a memory and a processor connected to the memory. The processor is configured to execute instructions stored in the memory, so that the communication apparatus performs any one of the implementations shown in the foregoing method embodiments.

In a possible implementation, the communication apparatus is used in a terminal device, so that the communication apparatus performs the method in the embodiment shown in FIG. 4.

In another possible implementation, the communication apparatus is used in a network device, so that the communication apparatus performs the method in the embodiment shown in FIG. 4.

An embodiment of this application further provides a communication system. The communication system includes the network device and the terminal device in the foregoing embodiments. The communication system is configured to perform any one of the implementations shown in the foregoing method embodiments.

An embodiment of this application further provides a communication system. The communication system includes the network device and the terminal device in the foregoing embodiments. The communication system is configured to perform any one of the implementations shown in the foregoing method embodiments.

An embodiment of this application further provides a computer program product. The computer program product includes computer program code. When the computer program code is run on a computer, the computer is enabled to perform any one of the implementations shown in the foregoing method embodiments.

An embodiment of this application further provides a chip system, including a memory and a processor. The memory is configured to store a computer program, and the processor is configured to invoke the computer program from the memory and run the computer program, to enable a chip to perform any one of the implementations shown in the foregoing method embodiments.

An embodiment of this application further provides a chip system, including a processor. The processor is configured to invoke and run a computer program, to enable a chip to perform any one of the implementations shown in the foregoing method embodiments.

In addition, it should be noted that the apparatus embodiments described above are only examples. The units described as separate parts may or may not be physically separate, and parts displayed as units may or may not be physical units, may be located in one position, or may be distributed on a plurality of network units. Some or all of the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be accomplished by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of software product. The computer software product is stored in a readable storage medium like a floppy disk, a USB flash drive, a removable hard disk drive, a ROM, a RAM, a magnetic disk, or an optical disc of a computer, and includes several instructions for instructing a computer device to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, network apparatus, computing device, or data center to another website, computer, network apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a data center or a network apparatus, integrating one or more usable media. The usable medium may be a magnetic medium (for example, a floppy disk, a hard disk drive, or a magnetic tape), an optical medium (for example, a DVD), a semiconductor medium (for example, a solid state drive (Solid State Drive, SSD)), or the like.

It should be understood that "one embodiment" or "an embodiment" mentioned in the entire specification means that particular features, structures, or characteristics related to the embodiment are included in one or more embodiments of this application. Therefore, "in one embodiment" or "in an embodiment" appearing throughout the specification does not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein.

In the several embodiments provided in this application, it should be understood that the disclosed system, apparatus, and method may be implemented in other manners. For example, the described apparatus embodiments are merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part that makes contribution, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. The term "and/or" describes an association relationship between associated objects and represents that three relationships may exist. For example, A and/or B may represent the following cases: Only A exists, both A and B exist, and only B exists. A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A positioning method, comprising:
receiving, by a network device, a first receiving time difference from a terminal device, wherein the first receiving time difference indicates a difference between time at which the terminal device receives a first reference signal and time at which the terminal device receives a second reference signal, the first reference signal is sent to the terminal device by a satellite, and the second reference signal is sent to the terminal device by the satellite;
obtaining, by the network device, a first time interval, wherein the first time interval indicates a time interval between a moment at which the satellite sends the first reference signal and a moment at which the satellite sends the second reference signal;
obtaining, by the network device, first coordinates and second coordinates, wherein the first coordinates indicate a location at which the satellite sends the first reference signal, and the second coordinates indicate a location at which the satellite sends the second reference signal; and
determining, by the network device, first location information based on the first coordinates, the second coordinates, the first time interval, and the first receiving time difference, wherein the first location information is location information that is of the terminal device and that is obtained by the network device through measurement.

2. The method according to claim 1, wherein
the network device comprises a ground base station and the satellite; or
the network device comprises the satellite.

3. The method according to claim 2, wherein the first reference signal and the second reference signal that are sent to the terminal device by the satellite are from the ground base station.

4. The method according to claim 3, wherein the method further comprises:
obtaining, by the network device, a first feeding delay and a second feeding delay, wherein the first feeding delay is a transmission delay of the first reference signal from the ground base station to the satellite, and the second feeding delay is a transmission delay of the second reference signal from the ground base station to the satellite; and
the determining, by the network device, first location information based on the first coordinates, the second coordinates, the first receiving time difference, and the first time interval comprises:
determining, by the network device, the first location information based on the first coordinates, the second coordinates, the first receiving time difference, the first time interval, the first feeding delay, and the second feeding delay.

5. The method according to any one of claims 1 to 4, wherein the method further comprises:
receiving, by the network device, second location information from the terminal device, wherein the second location information is location information that is of the terminal device and that is obtained through measurement by the terminal device; and
verifying, by the network device by using the first location information, whether the second location information is accurate.

6. The method according to any one of claims 1 to 5, wherein the obtaining, by the network device, a first time interval comprises:
determining, by the network device based on a first beam direction, the first reference signal and the second reference signal that correspond to the first receiving time difference, wherein the first beam direction is a beam direction in which the terminal device sends the first receiving time difference to the satellite; and
determining, by the network device, the first time interval based on the sending time of the first reference signal and the sending time of the second reference signal.

7. The method according to any one of claims 1 to 6, wherein the method further comprises:
receiving, by the network device, a second receiving time difference from the terminal device, wherein the second receiving time difference indicates a difference between the time at which the terminal device receives the second reference signal and time at which the terminal device receives a third reference signal;
obtaining, by the network device, a second time interval, wherein the second time interval indicates a time interval between the moment at which the satellite sends the second reference signal and a moment at which the satellite sends the third reference signal;
obtaining, by the network device, third coordinates, wherein the third coordinates indicate a location at which the satellite sends the third reference signal; and
determining, by the network device, the first location information based on the first coordinates, the second coordinates, the third coordinates, the first time interval, the second time interval, the first receiving time difference, and the second receiving time difference.

8. The method according to claim 7, wherein the obtaining, by the network device, a second time interval comprises:
determining, by the network device based on a second beam direction, the second reference signal and the third reference signal that correspond to the second receiving time difference, wherein the second beam direction is a beam direction in which the terminal device sends the second receiving time difference to the satellite; and
determining, by the network device, the second time interval based on the sending time of the second reference signal and the sending time of the third reference signal.

9. The method according to claim 8, wherein an index of the first reference signal is different from an index of the third reference signal when the second beam direction is different from the first beam direction.

10. The method according to any one of claims 1 to 9, wherein the method further comprises:
sending, by the network device, first indication information to the terminal device, wherein the first indication information indicates that the first reference signal and the second reference signal are used for positioning measurement.

11. The method according to any one of claims 1 to 10, wherein the method further comprises:
determining, by the network device from a plurality of reference signals based on first configuration information, the first reference signal and the second reference signal for positioning measurement.

12. The method according to any one of claims 1 to 11, wherein the method further comprises:
sending, by the network device, second indication information to the terminal device, wherein the second indication information indicates the terminal device to receive the first reference signal and the second reference signal based on the first time interval.

13. The method according to any one of claims 1 to 12, wherein the method further comprises:
determining, by the network device based on second configuration information, the first time interval between the satellite sending the first reference signal and the second reference signal.

14. The method according to any one of claims 1 to 13, wherein the method further comprises:
receiving, by the network device, third indication information from the terminal device, wherein the third indication information indicates that the first receiving time difference corresponds to the first reference signal and the second reference signal.

15. The method according to claim 14, wherein the obtaining, by the network device, a first time interval comprises:
determining, by the network device based on the third indication information, that the first receiving time difference corresponds to the first reference signal and the second reference signal; and
determining, by the network device, the first time interval based on the sending moment at which the satellite sends the first reference signal and the sending moment at which the satellite sends the second reference signal.

16. The method according to any one of claims 1 to 15, wherein
the first reference signal carries the sending time at which the satellite sends the first reference signal; and
the second reference signal carries the sending time at which the satellite sends the second reference signal.

17. The method according to any one of claims 1 to 16, wherein the first reference signal and/or the second reference signal are/is any one of the following reference signals:
a primary synchronization signal PSS, a secondary synchronization signal SSS, a synchronization signal/physical broadcast channel block SSB, a demodulation reference signal DMRS, a channel state information reference signal CSI-RS, or a phase tracking reference signal PTRS.

18. A positioning method, comprising:
receiving, by a terminal device, a first reference signal sent by a satellite;
receiving, by the terminal device, a second reference signal sent by the satellite;
determining, by the terminal device, a first receiving time difference, wherein the first receiving time difference indicates a difference between time at which the terminal device receives the first reference signal and time at which the terminal device receives the second reference signal; and
sending, by the terminal device, the first receiving time difference to a network device, so that the network device determines first location information based on the first receiving time difference, wherein the first location information is location information of the terminal device.

19. The method according to claim 18, wherein the method further comprises:
obtaining, by the terminal device, second location information, wherein the second location information is location information that is of the terminal device and that is obtained through measurement by the terminal device; and
sending, by the terminal device, the second location information to the network device.

20. The method according to either of claims 18 and 19, wherein the method further comprises:
receiving, by the terminal device, a third reference signal sent by the satellite;
determining, by the terminal device, a second receiving time difference, wherein the second receiving time difference indicates a difference between the time at which the terminal device receives the second reference signal and time at which the terminal device receives the third reference signal; and
sending, by the terminal device, the second receiving time difference to the network device, so that the network device determines the first location information based on the first receiving time difference and the second receiving time difference.

21. The method according to any one of claims 18 to 20, wherein the method further comprises:
determining, by the terminal device from a plurality of reference signals based on third configuration information, the first reference signal and the second reference signal for positioning measurement, wherein the third configuration information indicates the terminal device to measure the receiving moment of the first reference signal and the receiving moment of the second reference signal.

22. The method according to any one of claims 18 to 20, wherein the method further comprises:
receiving, by the terminal device, first indication information sent by the network device, wherein the first indication information indicates that the first reference signal and the second reference signal are used for positioning measurement; and
determining, by the terminal device based on the first indication information, the first reference signal and the second reference signal whose receiving moments need to be measured.

23. The method according to any one of claims 18 to 22, wherein the method further comprises:
determining, by the terminal device based on fourth configuration information, the first time interval between receiving the first reference signal and the second reference signal, wherein the fourth configuration information indicates the first time interval; and
receiving, by the terminal device based on the fourth configuration information, the second reference signal after waiting for the first time interval after receiving the first reference signal.

24. The method according to any one of claims 18 to 22, wherein the method further comprises:
receiving, by the terminal device, second indication information sent by the network device, wherein the second indication information indicates the terminal device to receive the first reference signal and the second reference signal based on the first time interval; and
receiving, by the terminal device based on the second indication information, the second reference signal after waiting for the first time interval after receiving the first reference signal.

25. The method according to any one of claims 18 to 22, wherein the method further comprises:
sending, by the terminal device, third indication information to the network device, wherein the third indication information indicates the terminal device to receive the first reference signal and the second reference signal based on the first receiving time difference.

26. The method according to any one of claims 18 to 25, wherein the first reference signal carries sending time at which the satellite sends the first reference signal, and the second reference signal carries sending time at which the satellite sends the second reference signal; and
the method further comprises:
determining, by the terminal device based on the first reference signal, first coordinates of the satellite when the satellite sends the first reference signal;
determining, by the terminal device based on the second reference signal, second coordinates of the satellite when the satellite sends the second reference signal;
determining, by the terminal device, the first time interval based on the sending time of the first reference signal and the sending time of the second reference signal; and
determining, by the terminal device, the first location information based on the first time interval, the first receiving time difference, the first coordinates, and the second coordinates.

27. The method according to claim 26, wherein the method further comprises:
initiating, by the terminal device, random access to the network device based on the first location information.

28. A communication apparatus, wherein the communication apparatus comprises a transceiver module and a processing module connected to the transceiver module, and
the transceiver module and the processing module are configured to perform the steps of the method according to any one of claims 1 to 17 or claims 18 to 27.

29. A communication apparatus, wherein the communication apparatus comprises a communication interface and a processor connected to the communication interface, and
the communication interface and the processor are configured to perform steps of the method according to any one of claims 1 to 17 or claims 18 to 27.

30. A computer-readable storage medium, comprising a program, wherein when the program is executed by a processing unit, the method according to any one of claims 1 to 17 or claims 18 to 27 is performed.

31. A computer program product, comprising a computer program/instructions, wherein when the computer program/instructions is/are executed by a processor, steps of the method according to any one of claims 1 to 17 or claims 18 to 27 are implemented.

32. A chip, wherein the chip comprises a processing unit and a communication interface, the processing unit obtains program instructions through the communication interface, wherein the program instructions are executed by the processing unit, and the processing unit is configured to perform steps of the method according to any one of claims 1 to 17 or any one of claims 18 to 27.
